# EUROPEAN PATENT APPLICATION

(11) **EP 1 814 115 A2**
(43) Date of publication of application: **01.08.2007**
(21) Application number: 07001890.8
(22) Date of filing: 29.01.2007
(51) Int. Cl.: G11B 23/023, G11B 33/04, B65D 85/00

(54) **Cartridge accommodating case**

(30) Priority: 30.01.2006 JP 2006020749; 30.01.2006 JP 2006021174; 31.01.2006 JP 2006023069
(71) Applicant: Fujifilm Corporation, Minato-ku Tokyo (JP)
(72) Inventor: Imai, Fumihito, Odawara-shi Kanagawa (JP); Yukawa, Masaki, Odawara-shi Kanagawa (JP)
(74) Representative: Klunker . Schmitt-Nilson . Hirsch

(57) **Abstract**

A cartridge accommodating case including: a cartridge accommodating upper case as defined herein; and a cartridge accommodating lower case as defined herein, a partitioned chamber of an expanse which is twice as large as the partitioned chamber being formed in an interior of the cartridge accommodating case by superposing on each other the upper case and the lower case which respectively have a protruding portion and a recessed portion for mutual engagement and are of a same structure, and by engaging the protruding portion and the recessed portion, wherein a detour portion which is spaced apart a distance from a ridge line of the cartridge accommodated in the cartridge accommodating case is formed so as to form a space portion on an inner side of the detour portion in an area surrounding the ridge line.

## Description

### FIELD OF THE INVENTION

The present invention relates to a cartridge accommodating case for accommodating flat body-shaped cartridges in each of which a reel with a magnetic tape wound therearound is disposed.

### BACKGROUND OF THE INVENTION

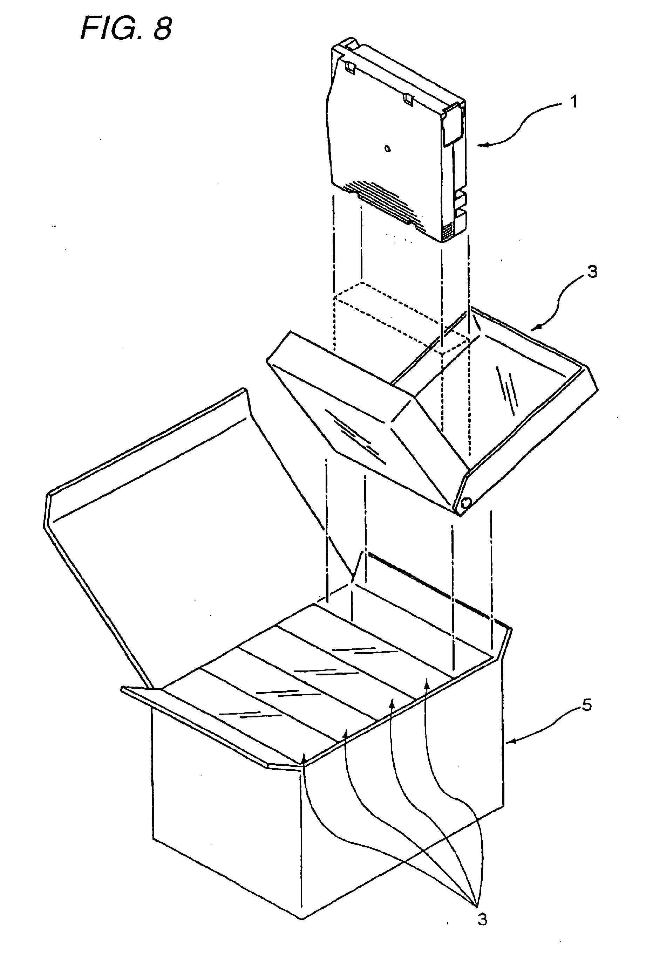

Conventionally, in cases where magnetic recording tape cartridges of a one-reel type are collectively packaged, as shown in Fig. 8, cartridges 1 are respectively accommodated in cases 3 in cartridge units, and a plurality of such cases 3 are packaged in a corrugated cardboard box 5 to retain cushioning characteristics.

However, in the case of this collective packaging, since the cartridges 1 are accommodated in the corrugated cardboard box 5, it is necessary to open the corrugated cardboard box 5 in order to confirm the presence or absence, types, and the like of the cartridges 1, so that there has been a problem in terms of convenience. In addition, there has been a problem in that if the corrugated cardboard is used in the packaging, the corrugated cardboard becomes wet when immersed in water, and the corrugated cardboard box 5 becomes broken.

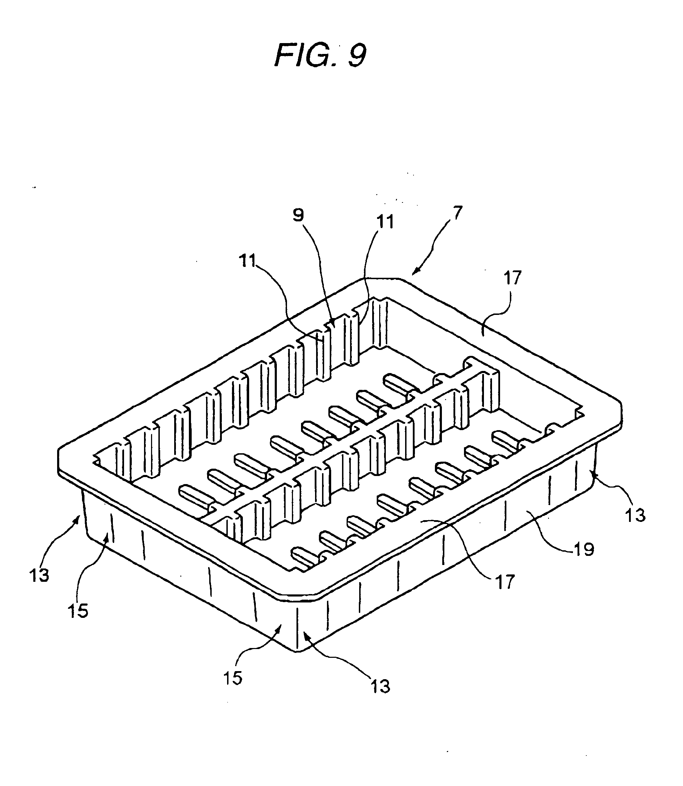

Under these circumstances, a case 7 in which the cartridges 1 are collectively packaged in a transparent plastic which does not cause a hindrance to the strength of the case even if it is wet with water and which allows the contents to be visible, is disclosed in a non-patent document (LTO-Ultrium L-pack, [online], TDK Corporation, Internet <URL:http://www.tdk.com/professional/lto/ltolpack .html>), and has become available on the market, as shown in Fig. 9.

### SUMMARY OF THE INVENTION

However, in the case 7 disclosed in the aforementioned non-patent document, the interior of the case 7 is partitioned into a plurality of accommodating spaces 9 for accommodating the individual cartridges 1 by a plurality of partition projections 11, and the cartridges 1 are respectively stored in these accommodating spaces 9 in cartridge units. In other words, the cartridges are dispersedly accommodated. For this reason, the cartridges 1 are accommodated one by one in the actual accommodating operation, so that there has been a problem in that the ease of use becomes poor particularly in the case where there is a large quantity of cartridges 1. In addition, in the above-described case 7, since the interior of the case 7 is partitioned into the individual accommodating spaces 9, the entire accommodating area (i.e., the opening area of the upper plane of the case 7) is equally divided by the individual accommodating spaces 9. For this reason, when the case 7 is dropped with far end portions 13 and 15 of lateral sides of the case 7 facing downward, the load of substantially the total number of accommodated cartridges is concentrated at these far end portions 13 and 15. Hence, there has been a problem in that the impact resistance is insufficient, and the impact absorbing capability when the case 7 is dropped is low.

In addition, a collar-like flange 17 is formed around the periphery of the opening of the case 7, and the flange 17 functions effectively as a structural portion for increasing the rigidity of a case body 19, particularly the rigidity of the opening. Further, pluralities of unillustrated protruding portions and recessed portions for fitting to counterparts of another case 7 are formed on this flange 17 symmetrically about a case center. As two cases 7 with their flanges 11 opposed to each other are superposed on each other vertically, these protruding portions and recessed portions are engaged to form the accommodating spaces 9 for the cartridges.

However, since the outer end of the peripheral edge of the case body 19, i.e., the outer end of the flange 17, is a terminating end of one flat plane, the rigidity of the flange 17 itself is not very high, although the rigidity of the opening of the case body is increased by the formation of the flange 17. Consequently, it has been apprehended that if the superposed assembly of the cases 7 is dropped with the cartridges accommodated therein, the flanges 17 would become deformed quite easily and be damaged by the load of the cartridges, which would open the flanges 17, with the result that the protruding portions and the recessed portions are disengaged to cause the cartridges to jump out from the accommodating spaces 9 and to be damaged.

Furthermore, with the case 7 described in the aforementioned non-patent document, since the case does not have means for absorbing a shock when an object has collided against it from the outside, or it has been dropped, there is a possibility that the case 7 can be broken, or the cartridges 1 can be damaged.

In addition, the cartridges 1 are generally weak against an impact applied in the axial direction of the reel. This is the problem that because there are cases where the jumping out of the tape has occurred at an end face of the wound tape, and if the tape is crushed or bent as a tape end abuts against a reel flange due to the jumping out of the tape, the smooth taking-up and paying-out of the magnetic tape is hampered, making the read/write impossible in a worst case.

In view of the above-described circumstances, the present assignee earlier developed a cartridge accommodating case which has high efficiency in the accommodating operation while maintaining impact resistance (this will be hereafter referred to as the prior invention).

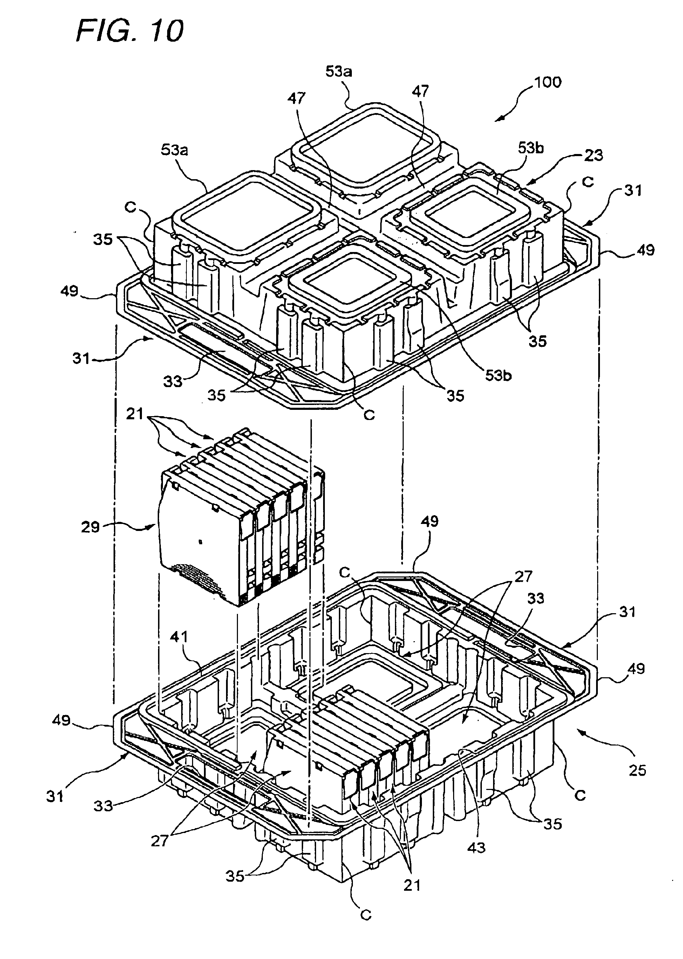

Fig. 10 shows the cartridge accommodating case as a prior invention.

This cartridge accommodating case 100 becomes openable as an upper case 23 and a lower case 25, which are of the same structure, are superposed on each other from above and below and engaged with each other. As the upper case 23 and the lower case 25 are engaged, a plurality of (in the drawing, four) partitioned chambers 27 are adapted to be formed therein. Cartridge groups 29, which are each formed into a block by juxtaposing a plurality of (in the drawing, five) cartridges 21 in their thicknesswise direction, are accommodated in the respective partitioned chambers 27.

The cartridge accommodating case 100 is comprised of the upper case 23 and the lower case 25 of an identical structure, which are each provided with a protruding portion (protrusion) 41 and a recessed portion (recessed groove) 43 which are adapted to engage with counterparts of another case. Here, in the peripheral portion surrounding the four partitioned chambers 27, the protrusion 41 and the recessed groove 43 are formed on the upper side and the lower side, respectively, bilaterally symmetrically about a case center line.

When the upper case 23 and the lower case 25 of the identical structure are combined vertically, the protrusions 41 are fitted into the recessed grooves 43 and are engaged with each other. As a result, the partitioned chambers 27 are hermetically closed, so that water resistance can be obtained, and the cartridges 21 can be protected.

The accommodating case 100 is so arranged that as partition portions 47 are respectively interposed between adjacent ones of the partitioned chambers 27 in which the cartridge groups 29 are accommodated, even in cases where impacts are applied to the respective cartridge groups 29 due to dropping or the like, the partition portions 47 are adapted to absorb the impacts, so that an impact force due to the inertia of the cartridge groups 29 does not affect the cartridge groups 29 between each other.

Each of the upper case 23 and the lower case 25 is constituted by an integrally molded piece of a plastic resin. For this reason, the upper case 23 and the lower case 25 having toughness for reliably protecting the cartridges as well as appropriate impact absorption can be mass produced easily at low cost by using a material which is relatively easy to handle.

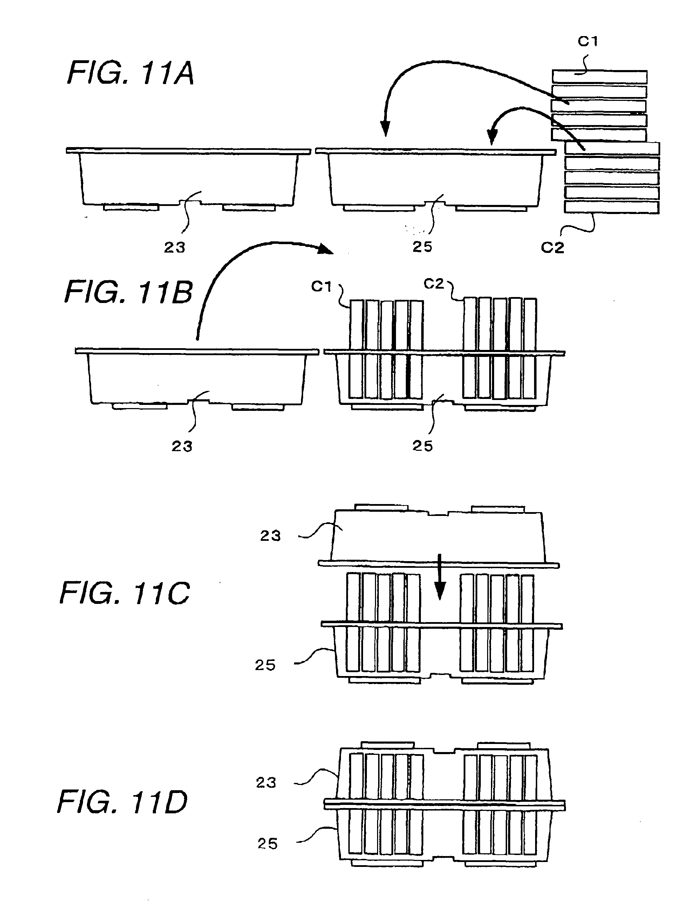

Figs. 11A to 11D are diagrams illustrating the procedure of accommodating a plurality of cartridges in the cartridge accommodating case.

In Fig. 11A, reference numeral 23 denotes the upper case; 25, the lower case; C1, a first cartridge group to be accommodated in a same partitioned chamber within the cartridge accommodating case; and C2, a second cartridge group to be accommodated in a same partitioned chamber within the cartridge accommodating case.

Fig. 11B shows a state in which the first cartridge group C2 and the second cartridge group C2 are respectively accommodated in the lower case 25. After this state, the lower case 25 is covered by the upper case 23.

In Fig. 11C, the upper case 23 is a placed on the lower case 25.

Fig. 11D shows the state in which the upper case 23 and the lower case 25 have been integrated, and the first cartridge group and the second cartridge group are respectively accommodated in the separate partitioned chambers within the transparent cartridge accommodating case.

According to such a cartridge accommodating case, at least one partitioned chamber is formed for holding the cartridge group formed into a block by juxtaposing the plurality of cartridges in their thicknesswise direction. Hence, as compared with the case where the plurality of cartridges are dispersedly accommodated in the same accommodation area, by the portion in which the plurality of cartridges are put together in one block, it becomes possible to secure surplus areas which do not contribute to the accommodation.

By using these surplus area portions as impact absorbing portions, it is possible to absorb the impact such as at the time of the dropping of the case and improve the impact resistance against the accommodated cartridges.

In addition, since it is not necessary to accommodate the plurality of cartridges individually in the conventional manner, the plurality of cartridges superposed and held in their thicknesswise direction can be collectively accommodated in the partitioned chamber, and accommodation can be performed efficiently in a short time, thereby making it possible to substantially improve the efficiency in the accommodating operation.

Although it was thus found that the above-described cartridge accommodating case excels in various aspects, it was also found that it has a weakness to be overcome. Namely, since corner portions C of the partitioned chambers of the cartridge accommodating case shown in Fig. 10 are formed orthogonally in their cross sections, the cartridges which are accommodated in the partitioned chambers are accommodated with their ridge lines located in close contact with the corner portions C.

However, if an impact is applied to the corner portion C in cases such as when the cartridge accommodating case is dropped with the cartridges thus accommodated in the cartridge accommodating case, that impact is transmitted as it is to the ridge line of the cartridge, so that the ridge line, which is considered particularly weak in the cartridge, is highly likely to become broken.

The present invention has been devised in view of the above-described drawback, and its object is to provide a cartridge accommodating case in which even if an impact at the time of such as the dropping of the cartridge accommodating case is applied to the corner portion C with the cartridges accommodated in the cartridge accommodating case, the ridge line of the cartridge is not broken.

To overcome the above-described drawback, in accordance with a first aspect of the invention there is provided a cartridge accommodating case comprising: a cartridge accommodating upper case having a partitioned chamber formed therein for holding a cartridge group formed into a block as a plurality of flat body-shaped cartridges, in each of which a reel with a magnetic tape wound therearound is disposed, are juxtaposed in a thicknesswise direction thereof; and a cartridge accommodating lower case having a partitioned chamber of a shape substantially identical to that of the partitioned chamber of the cartridge accommodating upper case, the partitioned chamber of the cartridge accommodating lower case being formed at a position opposing the partitioned chamber of the cartridge accommodating upper case; a partitioned chamber of an expanse which is twice as large as the partitioned chamber being formed in an interior of the cartridge accommodating case by superposing on each other the upper case and the lower case which respectively have a protruding portion and a recessed portion for mutual engagement and are of a same structure, and by engaging the protruding portion and the recessed portion, wherein a detour portion which is spaced apart a distance from a ridge line of the cartridge accommodated in the cartridge accommodating case is formed to thereby form a space portion on an inner side of the detour portion in an area surrounding the ridge line.

In the cartridge accommodating case according to the first aspect of the invention, a plurality of partitioned chambers may be formed as the partitioned chamber.

In the cartridge accommodating case according to the first aspect of the invention, a rib which is in partial contact with a side surface of the cartridge is preferably provided in the space portion.

In the cartridge accommodating case according to the first aspect of the invention, a plurality of ribs are preferably provided as the rib.

By virtue of the above-described construction, even if an impact such as at the time of the dropping of the cartridge accommodating case is .applied to the corner portion C in the state in which the cartridges are accommodated in the cartridge accommodating case, the ridge lines of the cartridges are prevented from becoming broken.

The above-described object of the invention can also be attained by the following construction (second aspect of the invention). It should be noted that the cartridge accommodating case can be constructed by combining the characteristic features of the second aspect of the invention with the characteristic features of the first aspect of the invention.
(1) A cartridge accommodating case for accommodating flat body-shaped cartridges in each of which a reel with a magnetic tape wound therearound is disposed, comprising: an upper case; and a lower case, the upper case and the lower case being adapted to be superposed on each other to form at least one partitioned chamber for holding a cartridge group formed into a block by juxtaposing a plurality of cartridges in a thicknesswise direction thereof, wherein a stepped bent portion which covers an outer end of a peripheral edge of one of the upper case and the lower case is formed on an outer end of a peripheral edge of the other one of the upper case and the lower case.
   According to this cartridge accommodating case, as compared with the case where the plurality of cartridges are dispersedly accommodated in the same accommodation area, by the portion in which the plurality of cartridges are accommodated by being put together in a block, it becomes possible to secure a surplus area which does not contribute to the accommodation, and this surplus area portion can be made use of as an impact absorbing portion (so-called crushable zone). Furthermore, since it is not necessary to accommodate the plurality of cartridges individually in the conventional manner, the plurality of cartridges superposed and held in their thicknesswise direction can be collectively accommodated in the partitioned chambers. In addition, when the upper case and the lower case are superposed on each other, the a stepped bent portion formed on the outer end of the peripheral edge of the other one of the upper case and the lower case covers the outer end of the peripheral edge of one of the upper case and the lower case, thereby increasing the rigidity of the peripheral edge of the case.
(2) The cartridge accommodating case according to (1) above, wherein the stepped bent portion is formed on the outer end of the peripheral edge on one side of a case center line bisecting sides of the upper case and the lower case formed in a substantially square shape.
   According to this cartridge accommodating case, since the stepped bent portion is formed on the outer end of the peripheral edge on one side of the case center line bisecting sides of the upper case and the lower case, the upper case and the lower case can be formed with an identical structure. Namely, when the upper case and the lower case of the identical structure each having the stepped bent portion formed on the outer end of the peripheral edge on one side are superposed on each other in face-to-face relation, the stepped bent portion provided on the outer end of the peripheral edge on one side of the upper case covers the outer end of the peripheral edge on the other one side of the lower case, while the stepped bent portion provided on the outer end of the peripheral edge on one side of the lower case covers the outer end of the peripheral edge on the other one side of the upper case.
(3) The cartridge accommodating case according to (2) above, wherein a substantially entire perimeter of each of the cases is surrounded by the stepped bent portion when the upper case and the lower case are superposed on each other.
   According to this cartridge accommodating case, since a substantially entire perimeter of each of the cases is surrounded by the stepped bent portion when the upper case and the lower case are superposed on each other, rigidity of the peripheral edge of the case is increased, and the overall strength of the case improves.
(4) The cartridge accommodating case according to any one of (1) to (3) above, wherein each of the upper case and the lower case is constituted by an integrally molded piece of a plastic resin.
   According to this cartridge accommodating case, a high-precision upper case and lower case can be mass produced easily at low cost by using a material which is relatively easily available.
   The cartridge accommodating case according to (4), wherein the plastic resin includes any one of polyethylene terephthalate, polypropylene, and polystyrene.
   According to this cartridge accommodating case, as the plastic resin is any one of polyethylene terephthalate, polypropylene, and polystyrene, the material is easily available, and easy and low-cost vacuum molding is possible.
(6) The cartridge accommodating case according to (4) or (5), wherein the plastic resin is translucent.
   According to this cartridge accommodating case, when the upper case and the lower case are engaged with each other, and the partitioned chambers are set in a hermetically closed state, the cartridges accommodated in the partitioned chambers are visible from the outside, so that the state of accommodation of the cartridges in the hermetically closed partitioned chambers can be easily grasped.
(7) The cartridge accommodating case according to any one of (4) to (6) above, wherein each of the upper case and the lower case is formed by using a plastic resin sheet having a thickness of 0.5 to 2.0 mm and subjecting it to drawing.

According to this cartridge accommodating case, as each of the upper case and the lower case is formed by using a plastic resin sheet having a thickness of 0.5 to 2.0 mm and subjecting it to drawing, the minimum structural strength of the partitioned chambers for accommodating the plurality of cartridge groups can be economically ensured. Further, the overall weight of the case can be set to a minimum while satisfying the minimum strength. In addition, as the case is formed with the aforementioned thickness, appropriate deformation becomes possible when an external force is applied, thereby making it possible to optimally secure the impact absorbing action with respect to the accommodated cartridges. In other words, if the case is thinner than the aforementioned thickness, the case becomes excessively deformable, so that the impact absorption effect declines. On the other hand, if the case is thicker than the aforementioned thickness, the cartridge is difficult to deform, so that the impact force is transmitted directly to the accommodated cartridges. In this construction, since the sheet thickness of the plastic resin is set to the aforementioned thickness, the formation of optimal impact absorbing portions (crushable zones) becomes possible.

According to the cartridge accommodating case in accordance with the second aspect of the invention, since at least one partitioned chamber is formed for holding the cartridge group formed into a block by juxtaposing the plurality of cartridges in their thicknesswise direction, as compared with the case where the plurality of cartridges are dispersedly accommodated in the same accommodation area, by the portion in which the plurality of cartridges are put together in one block, it becomes possible to secure a surplus area which does not contribute to the accommodation. By using this surplus area portion as an impact absorbing portion (so-called crushable zone), it is possible to absorb the impact such as at the time of the dropping of the case and improve the impact resistance against the accommodated cartridges. In addition, since it is not necessary to accommodate the plurality of cartridges individually, the plurality of cartridges superposed and held in their thicknesswise direction can be collectively accommodated in the partitioned chamber, and accommodation can be performed efficiently in a short time, thereby making it possible to substantially improve the efficiency in the accommodating operation.

In addition, since the stepped bent portion which covers the outer end of the peripheral edge of one of the upper case and the lower case is formed at the outer end of the peripheral edge of the other one of the upper case and the lower case, it is possible to increase the rigidity of the peripheral edge of the case. Even if the cartridge accommodating case is subjected to an impact of the drop, the peripheral edges of the upper case and the lower case are made difficult to open, thereby making it possible to prevent the jumping out of the cartridges.

The above-described object of the invention can also be attained by the following construction (third aspect of the invention). It should be noted that the cartridge accommodating case can be constructed by combining the characteristic features of the third aspect of the invention with those of the first aspect and/or the second aspect of the invention.
(1) A cartridge accommodating case for accommodating flat body-shaped cartridges in each of which a reel with a magnetic tape wound therearound is disposed, comprising: an upper case; and a lower case, the upper case and the lower case being adapted to be superposed on each other to form at least one partitioned chamber for holding a cartridge group formed into a block by juxtaposing a plurality of cartridges in a thicknesswise direction thereof; and a cushioning rib formed projectingly on at least an outer surface, in a thicknesswise direction of the cartridge, of the partitioned chamber.
   According to this cartridge accommodating case, since the cushioning rib is formed projectingly on at least an outer surface, in the thicknesswise direction of the cartridge, of the partitioned chamber, in cases such as when an object has collided against the partitioned chamber from the outside or the cartridge accommodating case has been dropped, the impact can be absorbed by the cushioning rib, making it possible to prevent the breakage of the cartridge accommodating case and suppress damage to the tape itself.
   The cartridge accommodating case according to (1) above, wherein the cushioning rib is formed projectingly on a side outside a side surface of the partitioned chamber, which is an outer side surface of the accommodating case.
   According to this cartridge accommodating case, in a case where a single partitioned chamber is provided, the cushioning rib is provided on the entire perimeter. In the case of the accommodating case having a plurality of partitioned chambers, the cushioning ribs are formed projectingly only on the side surfaces of the partitioned chambers which constitute outer side surfaces of the accommodating case. As a result, with respect to the side surfaces of the accommodating case, the impact from any direction can be alleviated.
(3) The cartridge accommodating case according to (1) or (2) above, wherein the partitioned chamber is formed by superposing on each other the upper case and the lower case which respectively have a protruding portion and a recessed portion for mutual engagement and are of a same structure, and by engaging the protruding portion and the recessed portion.
   According to this cartridge accommodating case, a protruding portion and a recessed groove are formed in advance on each of two cases bilaterally symmetrically about the center line of the case, the protruding portion and the recessed groove being capable of mutually engaging with counterparts of a mating case. If one of these two identical cases is inverted, and the cases are superposed on each other to engage the protruding portion and the recessed portion, it becomes possible to form one accommodating container. Namely, in the configuration of this accommodating case, two cases of an identical structure are used as the upper case and the lower case. One case is used both as a cover and as a part of the body. Thus, by using one kind of cases which have been molded by one mold, the accommodating case can be structured in which the partitioned chambers which are openable by the protruding portions and the recessed grooves are formed.
(4) The cartridge accommodating case according to any one of (1) to (3) above, wherein each of the upper case and the lower case is constituted by an integrally molded piece of a plastic resin.
   According to this cartridge accommodating case, a high-precision upper case and lower case can be mass produced easily at low cost by using a material which is relatively easily available.
(5) The cartridge accommodating case according to (4) above, wherein the cushioning rib is tapered in a direction of the depth of the partitioned chamber.
   According to this cartridge accommodating case, after the removal of the cartridges or before the accommodation of the cartridges, in the case where the cases are stacked by turning the upper case of the empty accommodating case upside down, the cushioning ribs do not interfere with each other by virtue of the tapered shapes of the cushioning ribs, so that the empty accommodating cases can be stacked compactly.
(6) The cartridge accommodating case according to (4) or (5) above, wherein the plastic resin includes any one of polyethylene terephthalate, polypropylene, and polystyrene.
   According to this cartridge accommodating case, as the plastic resin is any one of polyethylene terephthalate, polypropylene, and polystyrene, the material is easily available, and easy and low-cost vacuum molding is possible.
(7) The cartridge accommodating case according to (4) or (6), wherein the plastic resin is translucent.
   According to this cartridge accommodating case, when the upper case and the lower case are engaged with each other, and the partitioned chambers are set in a hermetically closed state, the cartridges accommodated in the partitioned chambers are visible from the outside, so that the state of accommodation of the cartridges in the hermetically closed partitioned chambers can be easily grasped.
(8) The cartridge accommodating case according to any one of (4) to (7) above, wherein each of the upper case and the lower case is formed by using a plastic resin sheet having a thickness of 0.5 to 2.0 mm and subjecting it to drawing.

According to this cartridge accommodating case, as each of the upper case and the lower case is formed by using a plastic resin sheet having a thickness of 0.5 to 2.0 mm and subjecting it to drawing, the minimum structural strength of the partitioned chambers for accommodating the plurality of cartridge groups can be economically ensured. Further, the overall weight of the case can be set to a minimum while satisfying the minimum strength. In addition, as the case is formed with the aforementioned thickness, appropriate deformation becomes possible when an external force is applied, thereby making it possible to optimally secure the impact absorbing action with respect to the accommodated cartridges. In other words, if the case is thinner than the aforementioned thickness, the case becomes excessively deformable, so that the impact absorption effect declines. On the other hand, if the case is thicker than the aforementioned thickness, the cartridge is difficult to deform, so that the impact force is transmitted directly to the accommodated cartridges. In this construction, since the sheet thickness of the plastic resin is set to the aforementioned thickness, the formation of optimal impact absorbing portions (crushable zones) becomes possible.

According to the cartridge accommodating case in accordance with the third aspect of the invention, in cases such as when an object has collided from the outside or the cartridge accommodating case has been dropped, the impact can be absorbed by the cushioning ribs to prevent the breakage of the cartridge accommodating case and damage to the cartridges, thereby making it possible to assure the quality of the cartridges. In addition, since the cushioning ribs are formed in a tapered shape, after the removal of the cartridges or before the accommodation of the cartridges, in the case where the cases are stacked by turning the upper case of the empty accommodating case upside down, the cushioning ribs do not interfere with each other by virtue of the tapered shapes of the cushioning ribs, so that the empty accommodating cases can be stacked compactly. Furthermore, since it is not necessary to accommodate the plurality of cartridges individually in the conventional manner, the plurality of cartridges superposed and held in their thicknesswise direction can be collectively accommodated in the partitioned chamber, and accommodation can be performed efficiently in a short time, thereby making it possible to substantially improve the efficiency in the accommodating operation.

### BRIEF DESCRIPTION OF THE DRAWINGS

Figs. 1A and 1B are conceptual diagrams of a cartridge accommodating case having one partitioned chamber, in which Fig. 1A is a vertical sectional perspective view of a first example in accordance with a first embodiment of this invention, and Fig. 1B is a vertical sectional perspective view in accordance with a prior invention (Fig. 10);
Fig. 2A is a horizontal sectional perspective view of the cartridge accommodating case having one partitioned chamber in accordance with this invention;
Fig. 2B is a horizontal sectional perspective view of the cartridge accommodating case having one partitioned chamber in accordance with the prior invention (Fig. 10);
Figs. 3A and 3B are diagrams explaining a weakness of the first example, in which Fig. 3A shows a self-standing state, and Fig. 3B shows a tilted state;
Fig. 4 is a diagram illustrating ribs of a second example in accordance with the first embodiment of the invention;
Fig. 5 is an exploded perspective view in which an upper case and a lower case are separated, explaining the first and second examples which are applied to a cartridge accommodating case having four partitioned chambers;
Figs. 6A and 6B are explanatory diagrams of the upper case shown in Fig. 5, in which Fig. 6A is a plan view thereof, and Fig. 6B is a side view thereof;
Figs. 7A and 7B are diagrams explaining the cartridge accommodating case, in which Fig. 7A is a side view taken in the direction of arrow A in Fig. 6A, and Fig. 7B is an external view of essential portions of the cartridge accommodating case, illustrating cushioning ribs provided on outer wall surfaces of the partitioned chamber;
Fig. 8 is an explanatory diagram of a first conventional method for accommodating the plurality of cartridges;
Fig. 9 is an explanatory diagram of a second conventional method 1 for accommodating the plurality of cartridges;
Fig. 10 is an exploded perspective view in which an upper case and a lower case of a cartridge accommodating case having four partitioned chambers in accordance with the prior invention are separated;
Figs. 11A to 11D are diagrams illustrating the procedure of accommodating a plurality of cartridges in the cartridge accommodating case by using the cartridges shown in Fig. 10;
Fig. 12 is an exploded perspective view in which the upper case and the lower case of the accommodating case in accordance with a second embodiment of the invention are separated;
Figs. 13A and 13B are explanatory diagrams of the upper case shown in Fig. 12, in which Fig. 13A is a plan view thereof, and Fig. 13B is a side view thereof;
Fig. 14 is a side view taken in the direction of arrow A in Fig. 13A;
Fig. 15 is an external view of essential portions of the accommodating case, illustrating cushioning ribs provided on the outer wall surfaces of the partitioned chamber;
Fig. 16 is a cross-sectional view of a peripheral edge of the case, illustrating a stepped bent portion;
Fig. 17 is a perspective view illustrating an overlapping state of terminal ends of the stepped bent portions;
Fig. 18 is a cross-sectional view illustrating a modification of the stepped bent portion;
Fig. 19 is an exploded perspective view in which the upper case and the lower case of the cartridge accommodating case in accordance with a third embodiment of the invention are separated;
Figs. 20A and 20B are explanatory diagrams of the upper case shown in Fig. 19, in which Fig. 20A is a plan view thereof, and Fig. 20B is a side view thereof; and
Fig. 21 is a perspective view in which the upper case and the lower case of the cartridge accommodating case shown in Fig. 19 are assembled.

### DETAILED DESCRIPTION-OF THE INVENTION

Hereafter, referring to the accompanying drawings, a detailed description will be given of a preferred form of the cartridge accommodating case in accordance with a first embodiment of the invention.

### (Examples of Application to Cartridge Accommodating Case Having One Partitioned Chamber)

### First Example

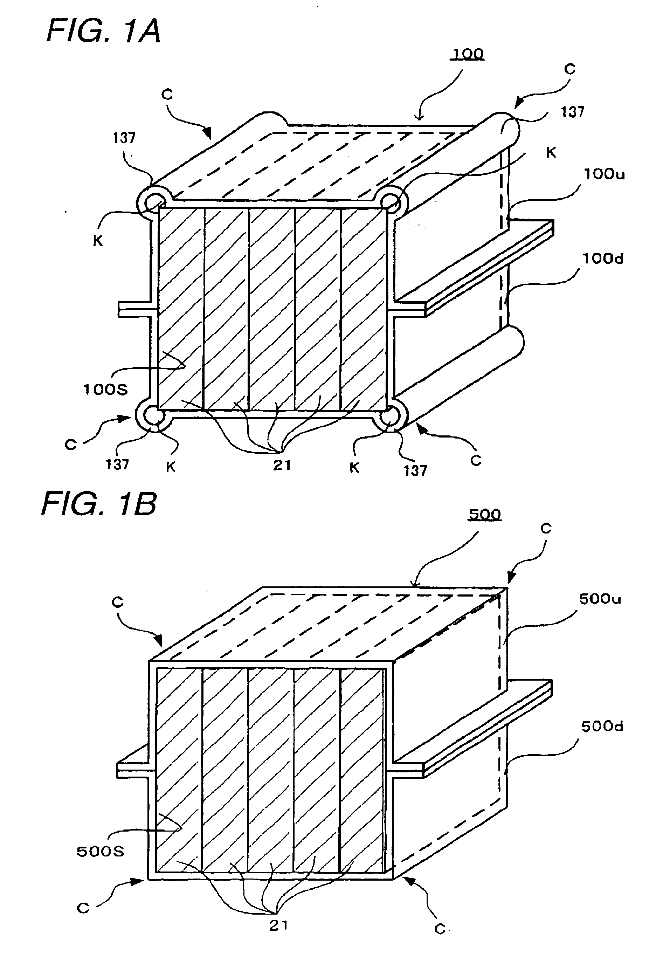

Figs. 1A and 1B are conceptual diagrams explaining a cartridge accommodating case consisting one partitioned chamber, in which Fig. 1A is a vertical sectional perspective view of a first example in accordance with the first embodiment of this invention, and Fig. 1B is a vertical sectional perspective view in accordance with the prior invention.

In Fig. 1B, a cartridge accommodating case 500 is comprised of an upper case 500u and a lower case 500d. As the upper case 500u and the lower case 500d are superposed on each other, a partitioned chamber 500S is formed in its interior, and a plurality of (in the drawing, five) cartridges 21 are accommodated therein without free play.

In Fig. 1A, on the other hand, a cartridge accommodating case 100 is comprised of an upper case 100u and a lower case 100d. As the upper case 100u and the lower case 100d are superposed on each other, a partitioned chamber 100S is formed in its interior, and a plurality of (in the drawing, five) cartridges 21 are accommodated therein without free play.

This invention of Fig. 1A and the prior invention of Fig. 1B are configured similarly in the above-described aspects.

However, this invention of Fig. 1A and the prior invention of Fig. 1B differ in the shape of corner portions C at upper and lower, left and right ends in the drawing.

In the prior invention of Fig. 1B, the corner portions C of the cartridge accommodating case 500 are formed at right angles in the same way as those of the cartridges 21, and the ridge lines at the mutually opposing corner portions of the cartridge accommodating case 500 and the cartridge 21 are in close contact with each other without a gap. In contrast, in this invention of Fig. 1A, a detour portion 137 which is spaced apart a predetermined distance from the ridge line of the cartridge 21 is formed at each corner portion C of the cartridge accommodating case 100 to thereby form a space portion K on the inner side of the detour portion 137 in an area surrounding the ridge line.

If the cartridge accommodating case 500 of the prior invention is dropped and an impact is applied to its corner portion C, that impact is transmitted directly to the cartridge 21 through the material of the cartridge accommodating case 100, so that there is a high possibility that the ridge line of the cartridge 21, i.e., the contents, becomes broken.

However, in the invention of Fig. 1A, since the detour portion 137 which is spaced apart a predetermined distance from the ridge line of the cartridge 21 is formed at each corner portion C of the cartridge accommodating case 100 to thereby form the space portion K on the inner side of the detour portion 137 in the area surrounding the ridge line, even if the cartridge accommodating case 100 is dropped and an impact is applied to its corner portion C, that impact is absorbed by the resiliency of the detour portion 137 of the cartridge accommodating case 100, thereby safely protecting the cartridge 21, i.e., the contents.

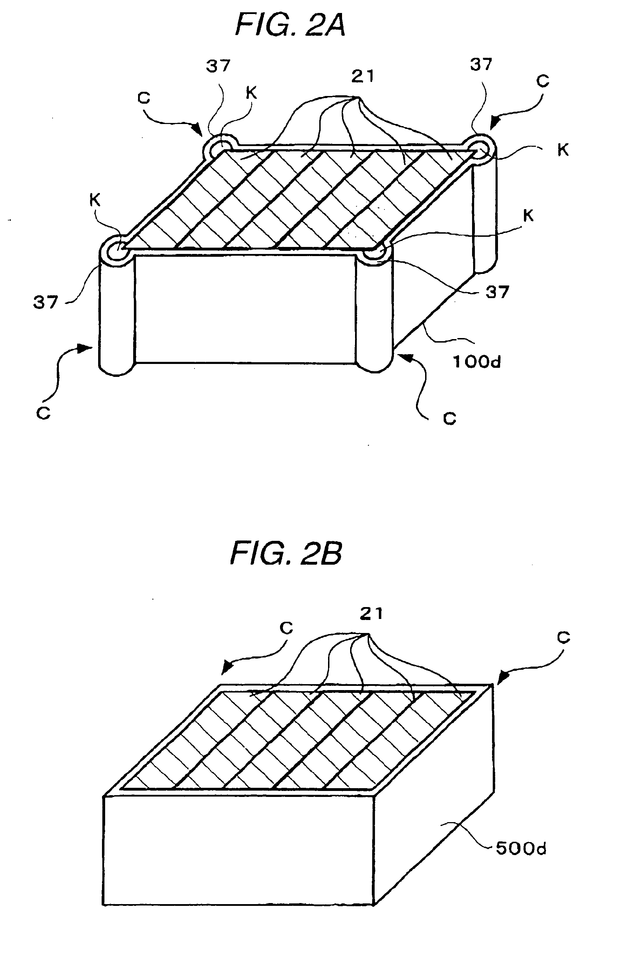

Figs. 2A and 2B are conceptual diagrams explaining the partitioned chamber portion of the cartridge accommodating case, in which Fig. 2A is a horizontal sectional perspective view in accordance with this invention, and Fig. 2B is a horizontal sectional perspective view in accordance with the prior invention (Fig. 10).

The difference between Figs. 1A and 2A, on the one hand, and Figs. 2A and 2B, on the other hand, lies in that, in Figs. 1A and 2A, the partitioned chamber portion is explained by a vertical cross section, whereas, in Figs. 2A and 2B, the partitioned chamber portion is explained by a horizontal cross section.

Figs. 2A and 2B show the lower case 100d of the cartridge accommodating case 100 and the lower case 500d of the cartridge accommodating case 500, respectively, and the upper cases are also constructed in the same way.

In Fig. 2B, the partitioned chamber 500S is formed inside the lower case 500d for cartridge accommodation, and the plurality of cartridges 21 are accommodated therein without free play. Meanwhile, in Fig. 2A as well, the partitioned chamber 100S is formed inside the lower case 100d, and the plurality of cartridges 21 are accommodated therein without free play.

This invention of Fig. 1A and the prior invention of Fig. 1B are configured similarly in the above-described aspects.

However, this invention of Fig. 2A and the prior invention of Fig. 2B differ in the shape of the left and right corner portions C on this side and the farther side in the drawing. In the prior invention of Fig. 2B, the corner portions C of the lower case 500d are formed at right angles in the same way as those of the cartridges 21, and the ridge lines at the mutually opposing corner portions of the cartridge accommodating case 500 and the cartridge 21 are in close contact with each other. In contrast, in this invention of Fig. 2A, a detour portion 37 which is spaced apart a predetermined distance from the ridge line of the cartridge 21 is formed at each corner portion C of the cartridge accommodating case 100 to thereby form the space portion K on the inner side of the detour portion 37 in an area surrounding the ridge line.

If the cartridge accommodating case 500 with the cartridges 21 accommodated therein is dropped and an impact is applied to its corner portion C, that impact is transmitted directly to the cartridge 21 through the material of the cartridge accommodating case 100, so that there is a high possibility that the ridge line of the cartridge 21, i.e., the contents, becomes broken.

However, in the invention of Fig. 2A, since the detour portion 37 which is spaced apart a predetermined distance from the ridge line of the cartridge 21 is formed at each corner portion C of the cartridge accommodating case 100 to thereby form the space portion K on the inner side of the detour portion 37 in the area surrounding the ridge line, even if the cartridge accommodating case 100 is dropped and an impact is applied to its corner portion C, that impact is absorbed by the resiliency of the detour portion 37 of the cartridge accommodating case 100, thereby safely protecting the cartridge 21, i.e., the contents.

As can be understood from Figs. 1A and 1B and Figs. 2A and 2B referred to above, the partitioned chamber portion of the cartridge accommodating case of the first example in accordance with the first embodiment of this invention has a cubic or rectangular parallelepiped space formed in its interior. The detour portions are respectively formed for all the ridge line portions of the cartridge accommodating case forming the cubic or rectangular parallelepiped space, i.e., in areas surrounding the ridge lines, to thereby form space portions in their interiors.

By virtue of this arrangement, even if an impact is applied to the corner portion, that impact is absorbed by the resiliency of the detour portion of the cartridge accommodating case, thereby safely protecting the cartridge, i.e., the contents.

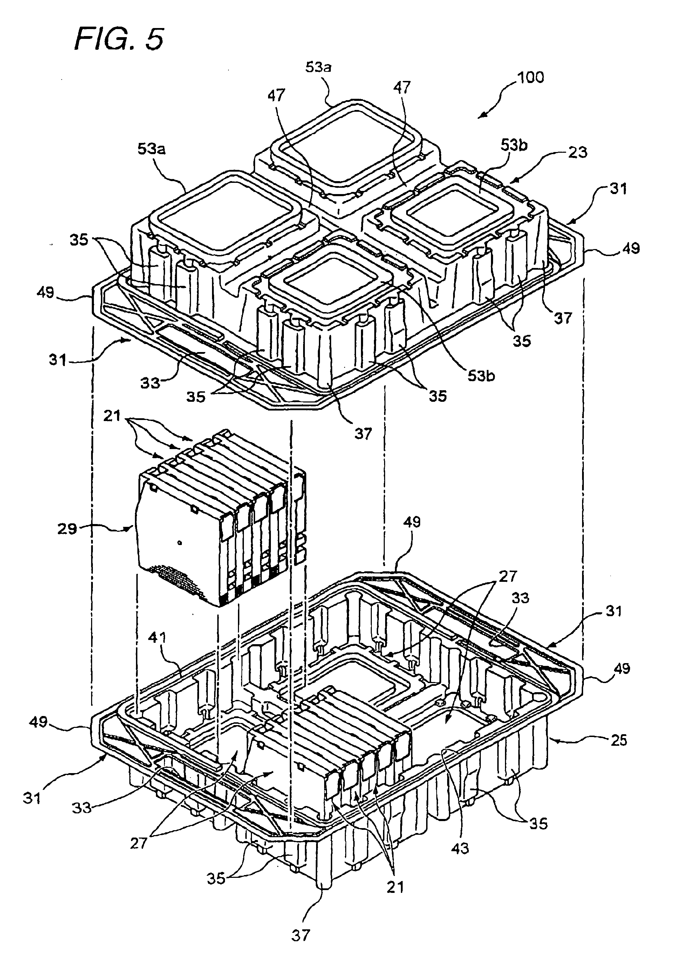

It should be noted that although in the drawings an example is shown in which one partitioned chamber is formed in the cartridge accommodating case, this invention is not limited to the same, and it goes without saying that two partitioned chambers may be formed in the cartridge accommodating case, or four partitioned chambers (which example is shown in Fig. 5) or eight or more partitioned chambers may be formed. As the first example in accordance with the first embodiment in such cases, space portions are respectively provided at the ridge line portions of the respective cartridge accommodating case.

### Second Example

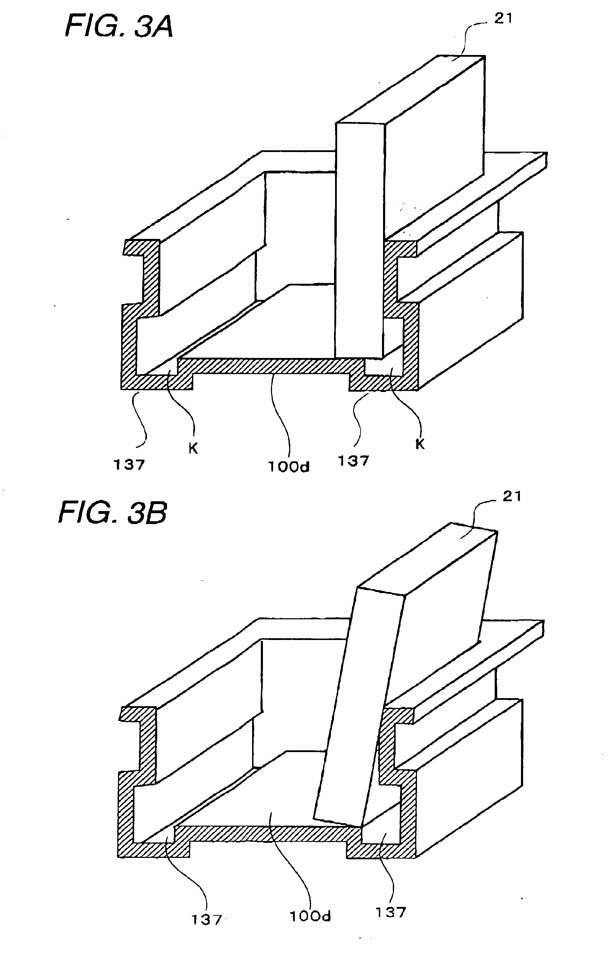

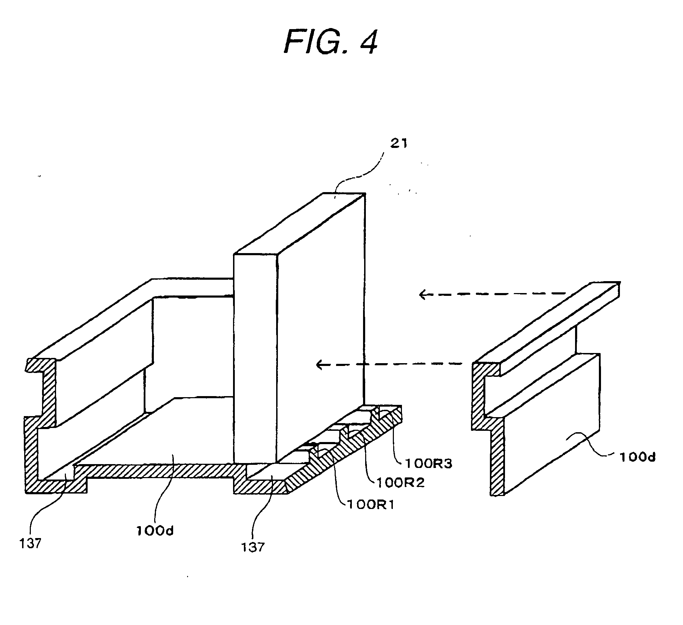

Figs. 3A, 3B, and 4 are diagrams explaining a second example in accordance with the first embodiment of the invention. Figs. 3A and 3B are diagrams explaining a further aspect of the above-described first example to be overcome, in which Fig. 3A shows a desirable self-standing state of the cartridge accommodated in the lower case when the upper case is removed, and Fig. 3B shows a tilted state which the cartridge can actually assume.

In Fig. 3A, the detour portions 137 of the first example for impact absorption are respectively provided at the left and right end portions of the bottom of the lower case 100d (although the detour portions 137 of the first example are circular, these detour portions 137 are set to be rectangular; both are similar in operation and advantages). The detour portions 137 on both sides extend in an elongated manner on the bottom along the ridge lines of the cartridges 21 from this side toward the farther side in the drawing. If one cartridge 21 is accommodated on one side in this lower case 100d, the cartridge 21 should ideally maintain its self-standing state, as shown in Fig. 3A. In practice, however, since not the entire surface of its bottom portion is in contact and the space portion K has been formed, the cartridge 21 is able to come into contact with the bottom of the lower case 100d only at its small area in its lengthwise direction, so that the cartridge 21 can easily tilt even by a small vibration, as shown in Fig. 3B.

The second example has been devised to overcome this drawback, and is characterized in that, as shown in Fig. 4, a plurality of (in the drawing, three) ribs 100R1 to 100R3 of a height for becoming flush with the bottom of the lower case 100d are provided uprightly at intervals in the space portion K defined by the detour portion 137 for impact absorption formed at each of the left and right end portions of the bottom of the lower case 100d.

By providing this construction, if one cartridge 21 is accommodated on one side in the lower case 100d, the plurality of ribs 100R support the bottom portion of the cartridge 21, so that its self-standing state can be maintained.

It should be noted that although, in the drawing, three ribs 100R1 to 100R3 are provided in one space portion, the number is not particularly limited. One rib or two or more ribs may be used. However, in the case where two ribs are provided, they should preferably be disposed in the vicinities of both sides, and in the case of one rib it should preferably be disposed at a central portion and with a large width in the light of stability.

### (Example of Application to Cartridge Accommodating Case Having Four Partitioned Chambers)

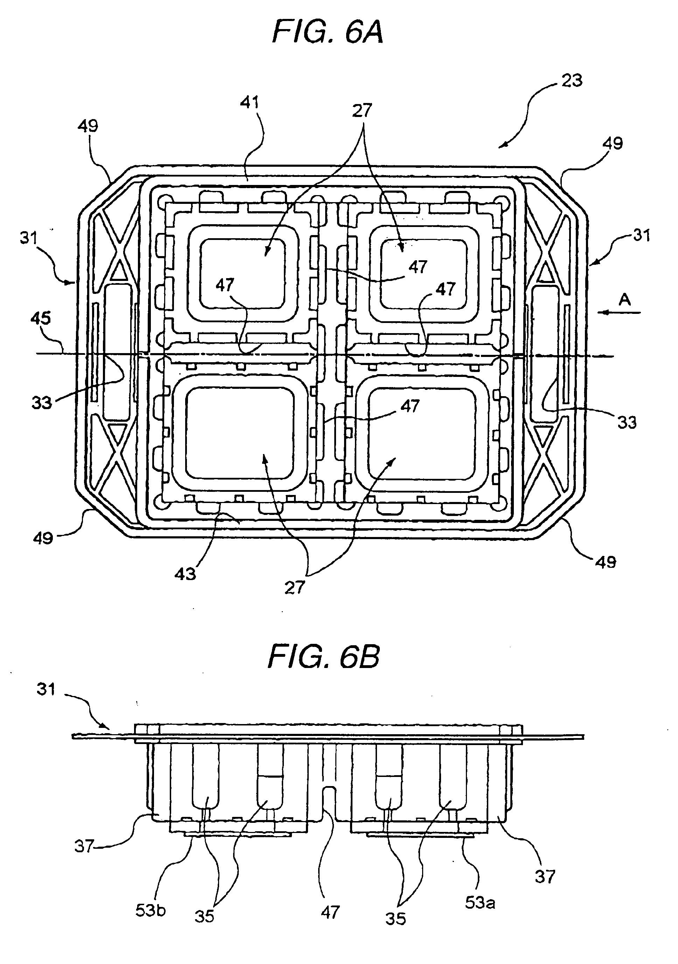

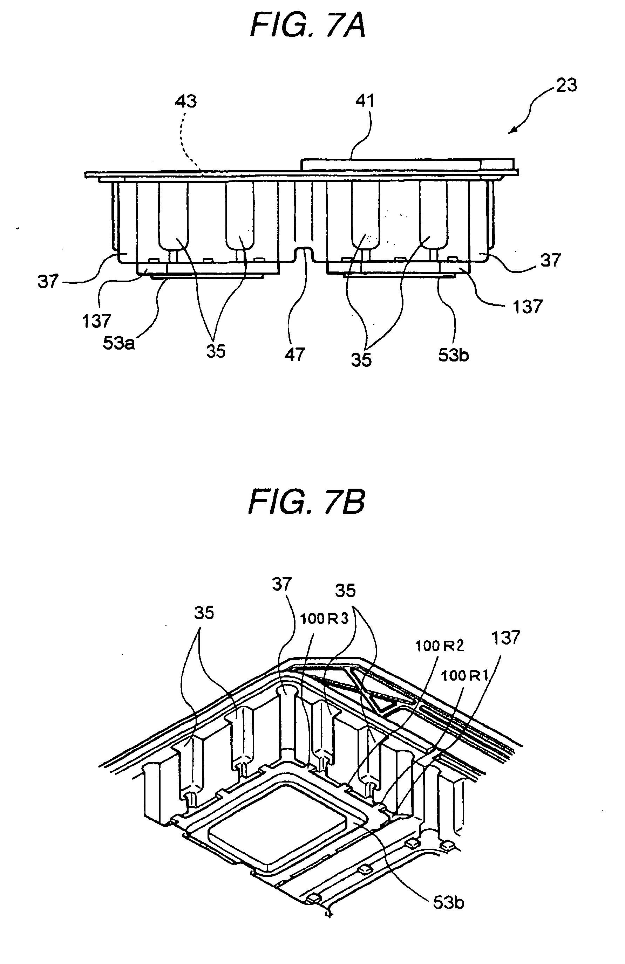

Figs. 5 to 7 are diagrams explaining the cartridge accommodating case in which four partitioned chambers provided with the features in accordance with the invention are formed. Fig. 5 is an exploded perspective view in which the upper case and the lower case are separated. Figs. 6A and 6B are explanatory diagrams of the upper case shown in Fig. 5, in which Fig. 6A is a plan view thereof, and Fig. 6B is a side view thereof. Figs. 7A and 7B are diagrams explaining the cartridge accommodating case, in which Fig. 7A is a side view taken in the direction of arrow A in Fig. 6A, and Fig. 7B is an external view of essential portions of the cartridge accommodating case, illustrating cushioning ribs provided on outer wall surfaces of the partitioned chamber.

The cartridge accommodating case 100 can be suitably used for accommodating flat body-shaped cartridges 21 in each of which, for example, a reel with a magnetic tape wound therearound is disposed.

The cartridge 21 has the magnetic tape-wound reel provided therein such that its axis is oriented in the thicknesswise direction. In this embodiment, a description is given by citing an example in which the cartridge 21 is formed in the shape of a square flat body, but the cartridge may be alternatively formed in the shape of a rectangular flat body.

The cartridge accommodating case 100 becomes openable as an upper case 23 and a lower case 25, which are of the same structure, are superposed on each other from above and below and engaged with each other. As the upper case 23 and the lower case 25 are engaged, a plurality of partitioned chambers 27 are adapted to be formed therein. In this embodiment, four partitioned chambers 27 are formed. Cartridge groups 29, which are each formed into a block by juxtaposing the plurality of cartridges 21 in their thicknesswise direction as shown in Fig. 5, can be held in the respective partitioned chambers 27. It should be noted that the cartridges 21 are uprightly disposed in such an orientation that their tape taking-out ports are set on the upper side, as shown in Fig. 5, so that the tape taking-out ports having weak strength are located on the upper side when the cartridges 21 are accommodated in the cartridge accommodating case 100. More preferably, the cartridges 21 are disposed such that the tape taking-out ports in two adjacent pairs of the partitioned chambers 27 face each other. In that case, the tape taking-out ports are provided on the interior side of the cartridge accommodating case 100, and therefore the tape taking-out ports can be protected from an impact from outside of the case.

Here, one partitioned chamber 27 forms a substantially identical accommodation volume as the volume of the cartridge group 29. Accordingly, even if the cartridges 21 are packed haphazardly in each partitioned chamber 27, since there are no partition walls for the individual cartridges, the cartridges 21 can be put in easily. For example, several cartridges 21 can be grasped together and packed, so that the efficiency of accommodating operation is improved remarkably as compared with the conventional arrangement in which the cartridges 21 are grasped and inserted one by one.

As compared with the case where the plurality of cartridges 21 are dispersedly accommodated in the same accommodation area, by the portion in which the plurality of cartridges 21 are accommodated by being put together in blocks, it becomes possible to secure a surplus area which does not contribute to the accommodation. In the cartridge accommodating case 100, this surplus area portion is made use of as an impact absorbing portion (so-called crushable zone).

Namely, flanges 31, which are impact absorbing portions, respectively extend on both end sides, in the axial direction of the magnetic tape-wound reel, of the upper case 23 and the lower case 25. A handle opening 33 for defining a handle for carrying the case is provided in the respective flange 31. Namely, the arrangement provided is such that, as for the cartridge accommodating case 100 with the upper case 23 and the lower case 25 engaged with each other, the user is able to put his or her fingers into the handle opening 33 on one side and grip the handle to carry the cartridge accommodating case 100 with the other flange 31 side facing downward. Alternatively, the cartridge accommodating case 100 can be carried by gripping the handles defined by the handle openings 33 on both sides with both hands and by setting the cartridge accommodating case 100 horizontally.

When the cartridge accommodating case 100 is carried, as described above, by gripping the handle defined by the handle opening 33 on one side with one hand with the other flange 31 side facing downward, if and when the cartridge accommodating case 100 slips off the fingers, the cartridge accommodating case 100 at the lower flange 31 side collides against the floor surface. At this time, the flanges 31, which serve as impact absorbing portions, are deformed by the load of the cartridge accommodating case 100 and the cartridge groups 29, and the impact energy is absorbed by that deformation, thereby alleviating the impact for the accommodated cartridges 21.

Generally, the cartridges 21 are weak against an impact applied in the axial direction of the reel. This is because there are cases where the jumping out of the tape has occurred at an end face of the wound tape, and if the tape is crushed or bent as a tape end abuts against a reel flange due to the jumping out of the tape, the smooth taking-up and paying-out of the magnetic tape is hampered, making the read/write impossible in a worst case. In this embodiment, as the flanges 31 serving as the impact absorbing portions are disposed in the axial direction of the reel of the cartridge 21, the impact resistance in the axial direction of the reel, which is weak against the impact, can be improved.

Fig. 7B is an external view of essential portions of the cartridge accommodating case, illustrating the cushioning ribs provided on the outer wall surfaces of the partitioned chamber.

In addition, cushioning ribs 35 are formed on the wall surfaces of each partitioned chamber 27 in such a manner as to protrude outwardly from the partitioned chamber 27. Accordingly, even if an object has collided against the cartridge accommodating case 100 from outside, since a gap is formed between the outer wall surface of the case and the cartridges 21 by the cushioning ribs 35, these cushioning ribs 35 act as a cushioning material to enhance the impact resistance.

At the corners of the partitioned chambers 27, the detour portions 37 and 137 which surround the ridge line portions of the cartridges 21 are formed, as shown in Fig. 7B (first example). Further, the plurality of (in the drawing, three) ribs 100R1 to 100R3 are provided uprightly in the space portion defined by the detour portion 137 (second example). Thus, there are provided an impact absorbing function for effectively preventing the deformation of the ridge line portions of the cartridges in cases such as when the cartridge accommodating case 100 has dropped with the cartridges 21 accommodated therein, as well as a self-standing function.

The cartridge accommodating case 100 is comprised of the upper case 23 and the lower case 25 of an identical structure, which are each provided with a protruding portion (protrusion) 41 and a recessed portion (recessed groove) 43 which are adapted to engage with counterparts of another case. In this embodiment, in the peripheral portion surrounding the four partitioned chambers 27, the protrusion 41 and the recessed groove 43 are formed on the upper side and the lower side, respectively, symmetrically about a case center line 45 shown in Fig. 6. Namely, on each of the upper case 23 and the lower case 25, the protrusion 41 and the recessed groove 43, which are both U-shaped in a plan view, are formed continuously on one side and on the other side, respectively, with the center line 45 located therebetween.

When the upper case 23 and the lower case 25 of the identical structure are combined vertically, the protrusions 41 are fitted into the recessed grooves 43 and are engaged with each other. As a result, the partitioned chambers 27 are hermetically closed, so that water resistance can be obtained, and the cartridge accommodating case 100 is capable of floating on water. In addition, the cartridges 21 can be protected from dust, moisture, splashed water, and other harmful substances. Namely, one case is used both as a cover and as a part of the body. Thus, by using one kind of cases which have been molded by one mold, the cartridge accommodating case 100 is structured in which the partitioned chambers 27 which are openable by the protrusions 41 and the recessed grooves 43 are formed.

In addition, a partition portion 47 is provided between adjacent ones of the partitioned chambers 27. This partition portion 47 is formed with a shape and a depth, which will be described later, so that its deformation with respect to an impact is facilitated. Namely, when the cartridge accommodating case 100 has dropped, the impact is alleviated as the partition portions 47 are deformed. The partition portions 47 are provided in any directions so that the dropping direction may be from the side where the flange 31 is provided or from a perpendicular direction thereto. In this embodiment, crisscross partition portions 47 are formed in such a manner as to partition the interior of the cartridge accommodating case 100 into the four partitioned chambers 27 disposed on four sides.

The cartridge accommodating case 100 is so arranged that as the partition portions 47 are interposed between adjacent ones of the partitioned chambers 27 in which the cartridge groups 29 are accommodated, even in cases where impacts are applied to the respective cartridge groups 29 due to dropping or the like, the partition portions 47 are adapted to absorb the impacts, so that an impact force due to the inertia of the cartridge groups 29 does not affect the cartridge groups 29 between each other.

The cartridge accommodating case 100 with the cartridge groups 29 accommodated therein is accommodated in an unillustrated corrugated cardboard box having an inner shape substantially identical to the outer shape of the cartridge accommodating case 100. For this reason, to improve the feature of taking out from the corrugated cardboard box, a bevel portion 49 is formed at each opposite end of the flange 31, the bevel portion 49 being constituted by a side portion which is inclined approximately 45 degrees relative to the flange 31. As a result, as for the cartridge accommodating case 100 accommodated in the corrugated cardboard box, triangular holes are respectively formed by these bevel portions 49 with respect to the inner wall surfaces of the corrugated cardboard box, so that fingers can be inserted therein to facilitate the taking-out operation.

Further, these bevel portions 49 may be constructed such that tabs, although not shown, are respectively provided extendedly on the bevel portions 49. In this case, when the upper case 23 and the lower case 25 of the identical structure are superposed one on top of the other vertically with the partitioned chambers 27 formed therein, as shown in Fig. 5, as the both tabs are moved away from each other in vertically opposite directions, the upper case 23 and the lower case 25 can be easily disengaged.

Further, at an outermost periphery of each of the upper case 23 and the lower case 25, a stepped bent portion is formed by slightly bending its peripheral edge. In the same way as the aforementioned protrusion 41 and recessed groove 43, this stepped bent portion is formed on either one side symmetrically about the center line 45. In consequence, when the upper case 23 and the lower case 25 are superposed on each other, the stepped bent portion covers the peripheral edge of the other case so as to improve dust-tightness and water-tightness.

Furthermore, large and small quadrangular frame portions 53a and 53b, which are capable of fitting to counterparts of the other case, protrude from outer bottom surface portions of the respective partitioned chambers 27. As a result, even if the accommodating cases 100 are stacked vertically, the quadrangular frame portions 53a and 53b on the lower surface of the upper cartridge accommodating case 100 are fitted to the quadrangular frame portions 53a and 53b on the upper surface of the lower cartridge accommodating case 100 to restrict their relative lateral offset, thereby preventing a collapse at the time of stacking.

Each of the upper case 23 and the lower case 25 is constituted by an integrally molded piece of a plastic resin. For this reason, the upper case 23 and the lower case 25 having toughness for reliably protecting the cartridges as well as appropriate impact absorption can be mass produced easily at low cost by using a material which is relatively easy to handle.

This plastic resin may include any one of, for example, polyethylene terephthalate, polypropylene, and polystyrene. As the plastic resin is any one of polyethylene terephthalate, polypropylene, and polystyrene, the material is easily available, recovery and reuse after the products have become waste products are possible, and easy and low-cost vacuum molding is possible.

In addition, the plastic resin should preferably be translucent. If so, when the upper case 23 and the lower case 25 are engaged with each other, and the partitioned chambers 27 are set in the hermetically closed state, the cartridges 21 accommodated in the partitioned chambers 27 are visible from the outside, so that the state of accommodation of the cartridges 21 in the hermetically closed partitioned chambers 27 can be easily grasped.

In addition, as each of the upper case 23 and the lower case 25 is formed by using a plastic resin sheet having a thickness of 0.5 to 2.0 mm and subjecting it to drawing, the minimum structural strength of the partitioned chambers for accommodating the plurality of cartridge groups can be economically ensured. Further, the overall weight of the case can be set to a minimum while satisfying the minimum strength. In addition, as the case is formed with the aforementioned thickness, appropriate deformation becomes possible when an external force is applied, thereby making it possible to optimally secure the impact absorbing action with respect to the accommodated cartridges. In other words, if the case is thinner than the aforementioned thickness, the case becomes excessively deformable, so that the impact absorption effect declines. On the other hand, if the case is thicker than the aforementioned thickness, the cartridge is difficult to deform, so that the impact force is transmitted directly to the accommodated cartridges. In this construction, since the sheet thickness of the plastic resin is set to the aforementioned thickness, the formation of optimal impact absorbing portions (crushable zones) becomes possible.

According to the above-described cartridge accommodating case, at least one partitioned chamber is formed for holding the cartridge group formed into a block by juxtaposing the plurality of cartridges in their thicknesswise direction, and space portions are respectively provided at the ridge line portions of the partitioned chamber. Hence, by the portion in which the plurality of cartridges are put together in one block, the plurality of cartridges can be collectively accommodated, and efficient accommodation in a short time becomes possible, making it possible to substantially improve the efficiency in the accommodation operation. Additionally, the space portions make it possible to absorb the impact such as at the time of the dropping of the case and improve the impact resistance against the accommodated cartridges.

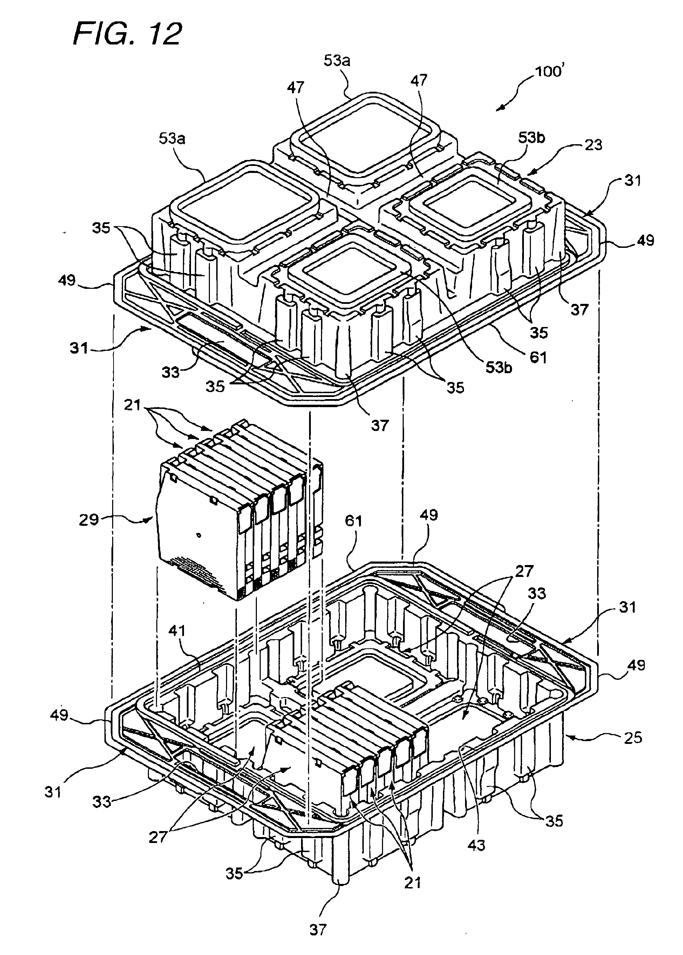

Referring now to Figs. 12 to 18, a detailed description will be given of another preferred form of the cartridge accommodating case in accordance with a second embodiment of the invention.

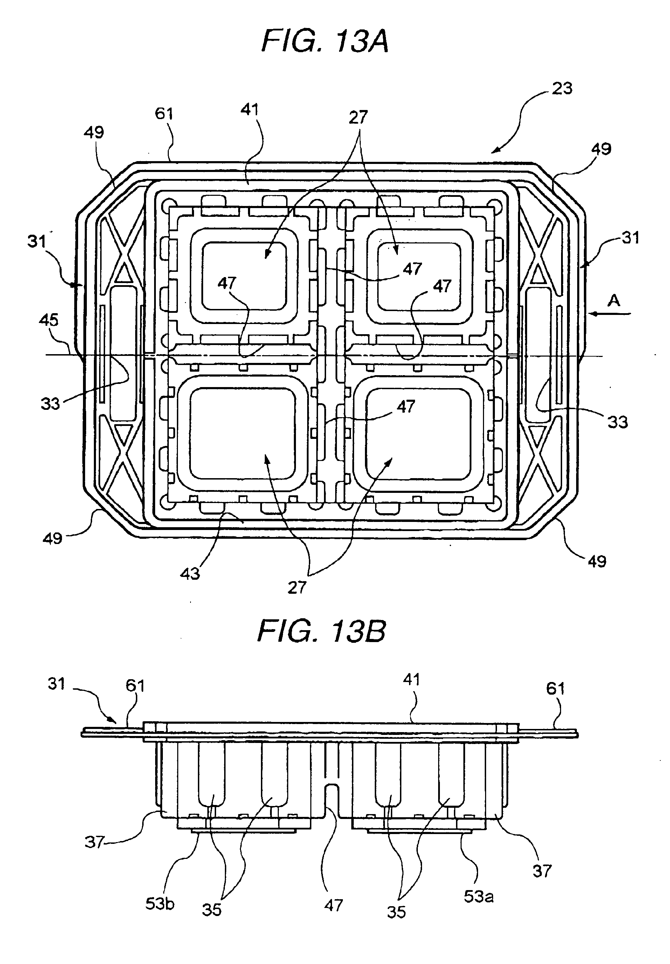

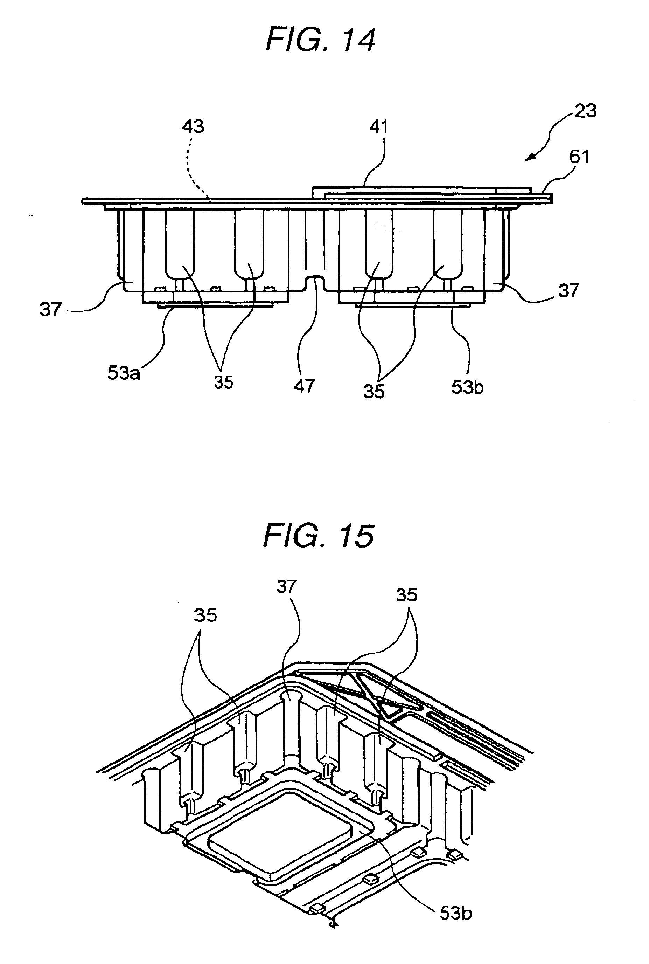

Fig. 12 is an exploded perspective view in which the upper case and the lower case of the accommodating case in accordance with the second embodiment of the invention are separated. Figs. 13A and 13B are explanatory diagrams of the upper case shown in Fig. 12, in which Fig. 13A is a plan view thereof, and Fig. 13B is a side view thereof. Fig. 14 is a side view taken in the direction of arrow A in Fig. 13A.

A cartridge accommodating case (hereafter simply referred to also as the "accommodating case") 100' in accordance with this embodiment can be suitably used for accommodating flat body-shaped cartridges 21 in each of which, for example, a reel with a magnetic tape wound therearound is disposed.

The cartridge 21 has the magnetic tape-wound reel provided therein such that its axis is oriented in the thicknesswise direction. In this embodiment, a description is given by citing an example in which the cartridge 21 is formed in the shape of a square flat body, but the cartridge may be alternatively formed in the shape of a rectangular flat body.

The accommodating case 100' becomes openable as the upper case 23 and the lower case 25, which are of the same structure, are superposed on each other from above and below and engaged with each other. As the upper case 23 and the lower case 25 are engaged, the plurality of partitioned chambers 27 are adapted to be formed therein. In this embodiment, four partitioned chambers 27 are formed. The cartridge groups 29, which are each formed into a block by juxtaposing the plurality of cartridges 21 in their thicknesswise direction as shown in Fig. 12, can be held in the respective partitioned chambers 27. It should be noted that the cartridges 21 are uprightly disposed in such an orientation that their tape taking-out ports are set on the upper side, as shown in Fig. 12, so that the tape taking-out ports having weak strength are located on the upper side when the cartridges 21 are accommodated in the accommodating case 100'. More preferably, the cartridges 21 are disposed such that the tape taking-out ports in two adjacent pairs of the partitioned chambers 27 face each other. In that case, the tape taking-out ports are provided on the interior side of the accommodating case 100', and therefore the tape taking-out ports can be protected from an impact from outside of the case.

In this embodiment, one partitioned chamber 27 forms a substantially identical accommodation volume as the volume of the cartridge group 29. Accordingly, even if the cartridges 21 are packed haphazardly in each partitioned chamber 27, since there are no partition walls for the individual cartridges, the cartridges 21 can be put in easily. For example, several cartridges 21 can be grasped together and packed, so that the efficiency of accommodating operation is improved remarkably as compared with the conventional arrangement in which the cartridges 21 are grasped and inserted one by one.

As compared with the case where the plurality of cartridges 21 are dispersedly accommodated in the same accommodation area, by the portion in which the plurality of cartridges 21 are accommodated by being put together in blocks, it becomes possible to secure a surplus area which does not contribute to the accommodation. In the accommodating case 100', this surplus area portion is made use of as an impact absorbing portion (so-called crushable zone).

Namely, the flanges 31, which are impact absorbing portions, respectively extend on both end sides, in the axial direction of the magnetic tape-wound reel, of the upper case 23 and the lower case 25. The handle opening 33 for defining a handle for carrying the case is provided in the respective flange 31. Namely, the arrangement provided is such that, as for the accommodating case 100' with the upper case 23 and the lower case 25 engaged with each other, the user is able to put his or her fingers into the handle opening 33 on one side and grip the handle to carry the accommodating case 100' with the other flange 31 side facing downward. Alternatively, the accommodating case 100' can be carried by gripping the handles defined by the handle openings 33 on both sides with both hands and by setting the accommodating case 100' horizontally.

When the accommodating case 100' is carried, as described above, by gripping the handle defined by the handle opening 33 on one side with one hand with the other flange 31 side facing downward, if and when the accommodating case 100' slips off the fingers, the accommodating case 100' at the lower flange 31 side collides against the floor surface. At this time, the flanges 31, which serve as impact absorbing portions, are deformed by the load of the accommodating case 100' and the cartridge groups 29, and the impact energy is absorbed by that deformation, thereby alleviating the impact for the accommodated cartridges 21.

Generally, the cartridges 21 are weak against an impact applied in the axial direction of the reel. This is because there are cases where the jumping out of the tape has occurred at an end face of the wound tape, and if the tape is crushed or bent as a tape end abuts against a reel flange due to the jumping out of the tape, the smooth taking-up and paying-out of the magnetic tape is hampered, making the read/write impossible in a worst case. In this embodiment, as the flanges 31 serving as the impact absorbing portions are disposed in the axial direction of the reel of the cartridge 21, the impact resistance in the axial direction of the reel, which is weak against the impact, can be improved.

Fig. 15 is an external view of essential portions of the accommodating case, illustrating the cushioning ribs provided on the outer wall surfaces of the partitioned chamber.

In addition, the cushioning ribs 35 are formed on the wall surfaces of each partitioned chamber 27 in such a manner as to protrude outwardly from the partitioned chamber 27. Accordingly, even if an object has collided against the accommodating case 100' from outside, since a gap is formed between the outer wall surface of the case and the cartridges 21 by the cushioning ribs 35, these cushioning ribs 35 act as a cushioning material to enhance the impact resistance. In particular, at the corners of the partitioned chambers 27, the detour portions 37 which surround the ridge line portions of the cartridges 21 are formed, as shown in Fig. 15. Thus, there is provided an impact absorbing function for effectively preventing the deformation of the ridge line portions of the cartridges in cases such as when the accommodating case 100' has dropped with the cartridges 21 accommodated therein.

The accommodating case 100' is comprised of the upper case 23 and the lower case 25 of an identical structure, which are each provided with the protruding portion (protrusion) 41 and the recessed portion (recessed groove) 43 which are adapted to engage with counterparts of another case. In this embodiment, in the peripheral portion surrounding the four partitioned chambers 27, the protrusion 41 and the recessed groove 43 are formed on the upper side and the lower side, respectively, symmetrically about the case center line 45 shown in Fig. 13. Namely, on each of the upper case 23 and the lower case 25, the protrusion 41 and the recessed groove 43, which are both U-shaped in a plan view, are formed continuously on one side and on the other side, respectively, with the case center line 45 located therebetween.

When the upper case 23 and the lower case 25 of the identical structure are combined vertically, the protrusions 41 are fitted into the recessed grooves 43 and are engaged with each other. As a result, the partitioned chambers 27 are hermetically closed, so that water resistance can be obtained, and the accommodating case 100' is capable of floating on water. In addition, the cartridges 21 can be protected from dust, moisture, splashed water, and other harmful substances. Namely, one case is used both as a cover and as a part of the body. Thus, by using one kind of cases which have been molded by one mold, the accommodating case 100' is structured in which the partitioned chambers 27 which are openable by the protrusions 41 and the recessed grooves 43 are formed.

In addition, the partition portion 47 is provided adjacent ones of the partitioned chambers 27. This partition portion 47 is formed with a shape and a depth, which will be described later, so that its deformation with respect to an impact is facilitated. Namely, when the accommodating case 100' has dropped, the impact is alleviated as the partition portions 47 are deformed. The partition portions 47 are provided in any directions so that the dropping direction may be from the side where the flange 31 is provided or from a perpendicular direction thereto. In this embodiment, crisscross partition portions 47 are formed in such a manner as to partition the interior of the accommodating case 100' into the four partitioned chambers 27 disposed on four sides.

The accommodating case 100' is so arranged that as the partition portions 47 are interposed between adjacent ones of the partitioned chambers 27 in which the cartridge groups 29 are accommodated, even in cases where impacts are applied to the respective cartridge groups 29 due to dropping or the like, the partition portions 47 are adapted to absorb the impacts, so that an impact force due to the inertia of the cartridge groups 29 does not affect the cartridge groups 29 between each other.

There are cases where the accommodating case 100' with the cartridge groups 29 accommodated therein is accommodated in an unillustrated corrugated cardboard box having an inner shape substantially identical to the outer shape of the accommodating case 100'. For this reason, to improve the feature of taking out from the corrugated cardboard box, the bevel portion 49 is formed at each opposite end of the flange 31, the bevel portion 49 being constituted by a side portion which is inclined approximately 45 degrees relative to the flange 31. As a result, as for the accommodating case 100' accommodated in the corrugated cardboard box, triangular holes are respectively formed by these bevel portions 49 with respect to the inner wall surfaces of the corrugated cardboard box, so that fingers can be inserted therein to facilitate the taking-out operation.

Further, these bevel portions 49 may be constructed such that tabs, although not shown, are respectively provided extendedly on the bevel portions 49. In this case, when the upper case 23 and the lower case 25 of the identical structure are superposed one on top of the other vertically with the partitioned chambers 27 formed therein, as shown in Fig. 12, as the both tabs are moved away from each other in vertically opposite directions, the upper case 23 and the lower case 25 can be easily disengaged.

Preferably, a stepped bent portion which covers the outer end of the peripheral edge of one of the upper case 23 and the lower case 25 is formed on the outer end of the peripheral edge of the other one of the upper case 23 and the lower case 25. In this case, the upper case 23 and the lower case 25 are provided with different structures. Accordingly, the upper case 23 and the lower case 25 are molded by different molds. As such a stepped bent portion is provided on one of the upper case 23 and the lower case 25, when the upper case 23 and the lower case 25 are superposed, this stepped bent portion covers the outer end of the peripheral edge of one of the upper case 23 and the lower case 25, thereby increasing the rigidity of the peripheral edge of the case.

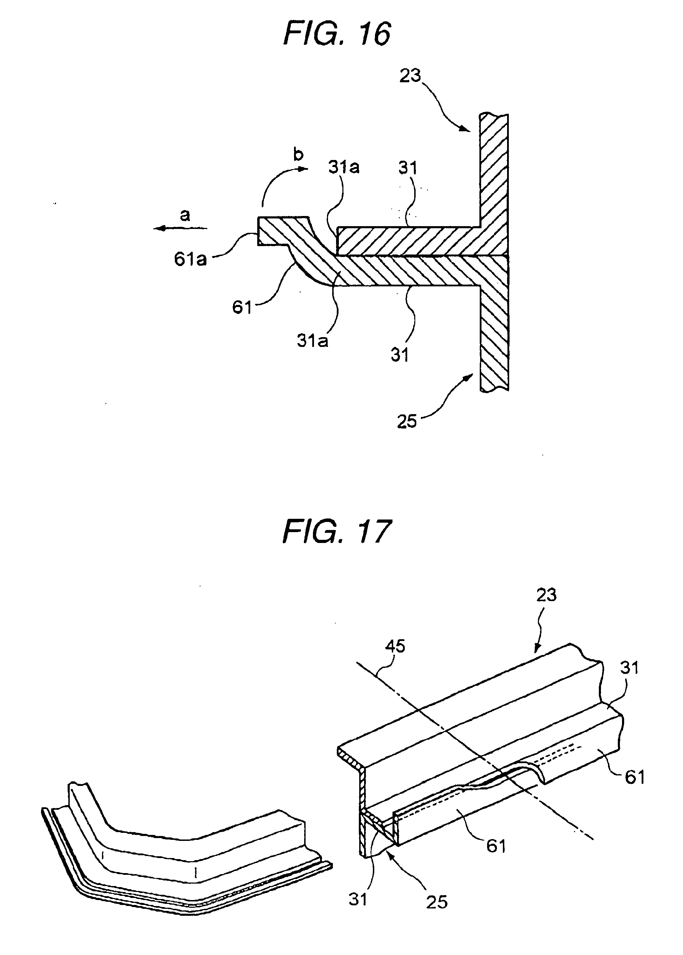

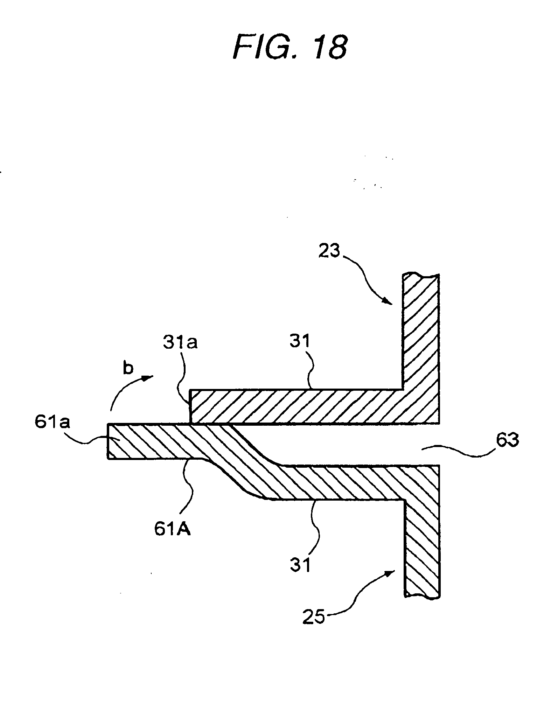

Fig. 16 is a cross-sectional view of the peripheral edge of the case and illustrates the stepped bent portion. Fig. 17 is a perspective view illustrating an overlapping state of terminal ends of the stepped bent portions. Fig. 18 is a cross-sectional view illustrating a modification of the stepped bent portion.

In this embodiment, as shown in Figs. 12, 13A, and 13B, a stepped bent portion 61 formed by slightly bending the peripheral edge of each of the upper case 23 and the lower case 25 is provided on a half perimeter of the outermost periphery of each of the upper case 23 and the lower case 25. Namely, in the accommodating case 100' in accordance with this embodiment, in the same way as the aforementioned protrusion 41 and recessed groove 43, this stepped bent portion 61 is formed on the outer end of the peripheral edge on either one side of the case center line 45 bisecting sides of the upper case 23 and the lower case 25 formed in a substantially square shape. As a result, the upper case 23 and the lower case 25 can be formed with an identical structure from the same mold.

With the accommodating case 100', when the upper case 23 and the lower case 25 of an identical structure each having the stepped bent portion 61 formed on the outer end of the peripheral edge on one side are superposed on each other in face-to-face relation, as shown in Fig. 16, the stepped bent portion 61 provided on the outer end of the peripheral edge on one side of, for instance, the lower case 25 covers the outer end of the peripheral edge (outer end of the flange 31) on the other one side of the upper case 23. Meanwhile, the stepped bent portion 61 provided on the outer end of the peripheral edge on one side of the upper case 23 covers the outer end of the peripheral edge (outer end of the flange 31) on the other one side of the lower case 25. In consequence, when the upper case 23 and the lower case 25 are superposed on each other, the stepped bent portion 61 covers the outer end of the other peripheral edge (outer end of the flange 31) so as to increase the rigidity of the peripheral edge of the case and improve dust-tightness and water-tightness.

Here, since the stepped bent portion 61 covers the outer end of the other peripheral edge (outer end of the flange 31), as shown in Fig. 16, if the dropping direction of the case is leftward (in the direction of arrow a) in Fig. 16, a distal end 61a of the stepped bent portion 61 during a collision is bent in the direction of wrapping around a distal end 31a of the flange 31 (in the direction of arrow b), i.e., clockwise in Fig. 16. As a result, the flanges 31 are each mutually clamped by the distal end 61 of the stepped bent portion 61 formed by bending the mating distal end 31a at the peripheral edge, thereby restricting the opening of the case due to an impact of the drop.

It should be noted that, as shown in Fig. 18, a stepped bent portion 61A may be formed such that the distal end 31a of the mating flange 31 is caused to abut against the distal end 61a of the stepped bent portion 61A after stepped-bending, while keeping intact the space 63 of the step portion formed by the stepped-bending. In this case as well, as the distal end 61a of the stepped bent portion 61A is bent clockwise, it is possible to restrict the opening of the case due to an impact of the drop.

Furthermore, the large and small quadrangular frame portions 53a and 53b, which are capable of fitting to counterparts of the other case, protrude from outer bottom surface portions of the respective partitioned chambers 27. As a result, even if the accommodating cases 100' are stacked vertically, the quadrangular frame portions 53a and 53b on the lower surface of the upper accommodating case 100' are fitted to the quadrangular frame portions 53a and 53b on the upper surface of the lower accommodating case 100' to restrict their relative lateral offset, thereby preventing a collapse at the time of stacking.

Each of the upper case 23 and the lower case 25 is constituted by an integrally molded piece of a plastic resin. For this reason, the upper case 23 and the lower case 25 having toughness for reliably protecting the cartridges as well as appropriate impact absorption can be mass produced easily at low cost by using a material which is relatively easy to handle.

This plastic resin may include any one of, for example, polyethylene terephthalate, polypropylene, and polystyrene. As the plastic resin is any one of polyethylene terephthalate, polypropylene, and polystyrene, the material is easily available, recovery and reuse after the products have become waste products are possible, and easy and low-cost vacuum molding is possible.

In addition, the plastic resin should preferably be translucent. If so, when the upper case 23 and the lower case 25 are engaged with each other, and the partitioned chambers 27 are set in the hermetically closed state, the cartridges 21 accommodated in the partitioned chambers 27 are visible from the outside, so that the state of accommodation of the cartridges 21 in the hermetically closed partitioned chambers 27 can be easily grasped.

In addition, as each of the upper case 23 and the lower case 25 is formed by using a plastic resin sheet having a thickness of 0.5 to 2.0 mm and subjecting it to drawing, the minimum structural strength of the partitioned chambers for accommodating the plurality of cartridge groups can be economically ensured. Further, the overall weight of the case can be set to a minimum while satisfying the minimum strength. In addition, as the case is formed with the aforementioned thickness, appropriate deformation becomes possible when an external force is applied, thereby making it possible to optimally secure the impact absorbing action with respect to the accommodated cartridges. In other words, if the case is thinner than the aforementioned thickness, the case becomes excessively deformable, so that the impact absorption effect declines. On the other hand, if the case is thicker than the aforementioned thickness, the cartridge is difficult to deform, so that the impact force is transmitted directly to the accommodated cartridges. In this construction, since the sheet thickness of the plastic resin is set to the aforementioned thickness, the formation of optimal impact absorbing portions (crushable zones) becomes possible.

According to the above-described cartridge accommodating case', at least one partitioned chamber 27 is formed for holding the cartridge group 29 formed into a block by juxtaposing the plurality of cartridges 21 in their thicknesswise direction. Hence, as compared with the case where the plurality of cartridges 21 are dispersedly accommodated in the same accommodation area, by the portion in which the plurality of cartridges 21 are put together in one block, it becomes possible to secure surplus areas which do not contribute to the accommodation. By using these surplus area portions as impact absorbing portions (so-called crushable zones), it is possible to absorb the impact such as at the time of the dropping of the case and improve the impact resistance against the accommodated cartridges 21.

Furthermore, since it is not necessary to accommodate the plurality of cartridges 21 individually in the conventional manner, the plurality of cartridges 21 superposed and held in their thicknesswise direction can be collectively accommodated in the partitioned chambers 27, and accommodation can be performed efficiently in a short time, thereby making it possible to substantially improve the efficiency in the accommodating operation.

In addition, since the stepped bent portion 61 which covers the outer end of the peripheral edge of one of the upper case 23 and the lower case 25 is formed at the outer end of the peripheral edge of the other one of the upper case 23 and the lower case 25, it is possible to increase the rigidity of the peripheral edge of the case. Even if the cartridge accommodating case' is subjected to an impact of the drop, the peripheral edges of the upper case 23 and the.lower case 25 are made difficult to open, thereby making it possible to prevent the jumping out of the cartridges 21.

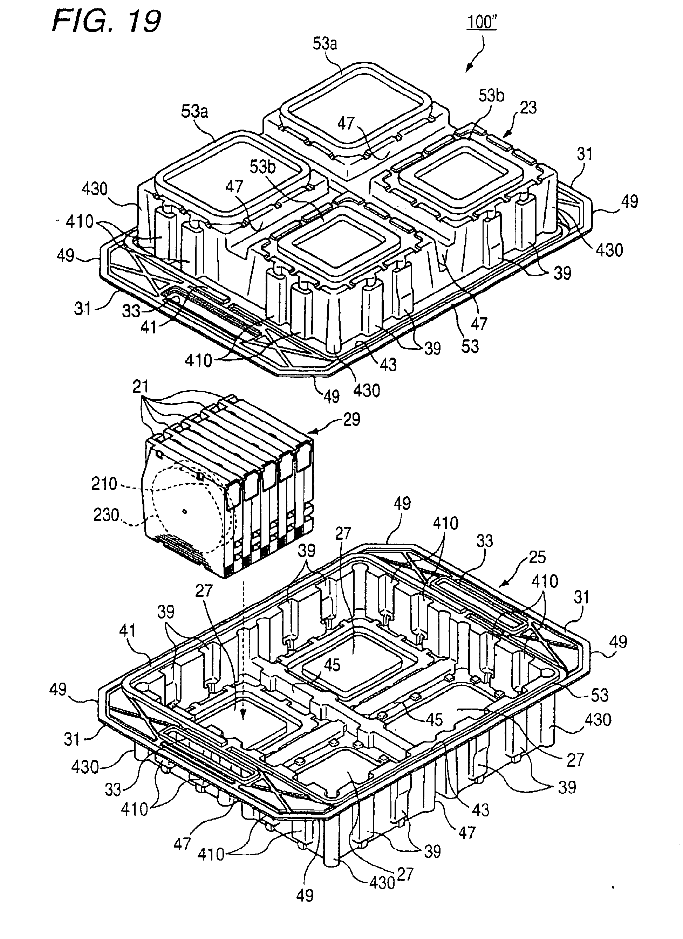

Referring now to Figs. 19 to 21, a detailed description will be given of a third embodiment of the cartridge accommodating case in accordance with the invention.

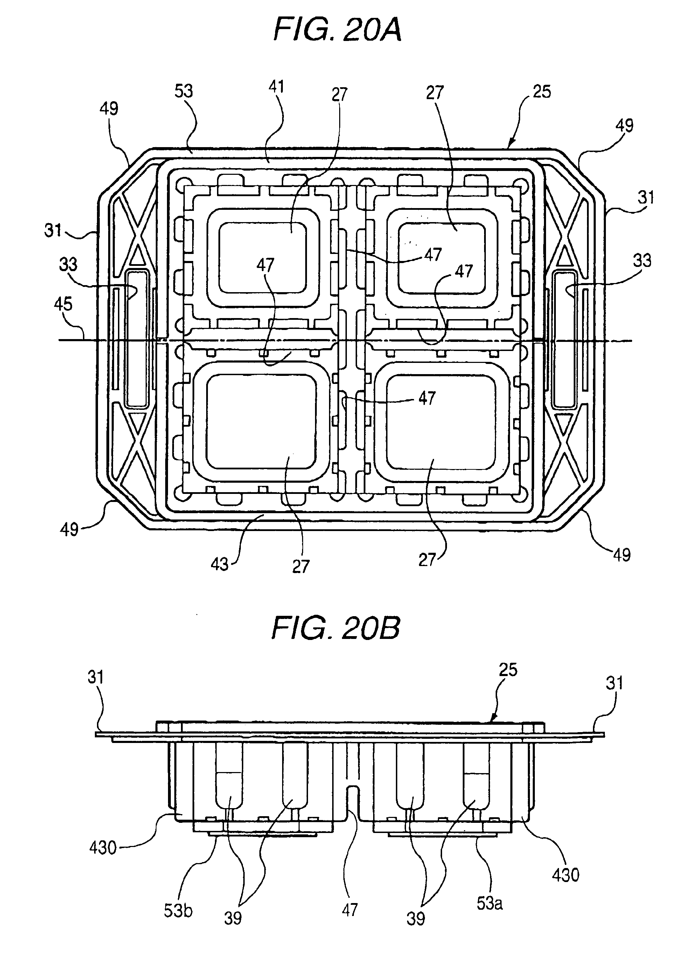

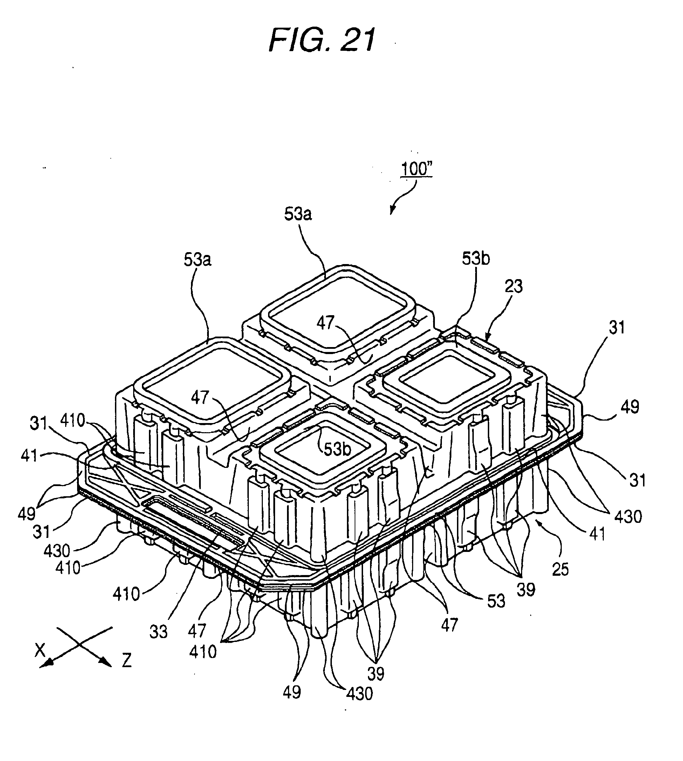

Fig. 19 is an exploded perspective view in which the upper case and the lower case of the cartridge accommodating case in accordance with the third embodiment of the invention are separated. Figs. 20A and 20B are explanatory diagrams of the upper case shown in Fig. 19, in which Fig. 20A is a plan view thereof, and Fig. 20B is a side view thereof. Fig. 21 is a perspective view in which the upper case and the lower case of the cartridge accommodating case shown in Fig. 19 are assembled.

A cartridge accommodating case (hereafter simply referred to also as the "accommodating case") 100" in accordance with this embodiment can be suitably used for accommodating flat body-shaped cartridges 21 in each of which a reel 230 with a magnetic tape 210 wound therearound is disposed.

Hereafter, a description which is common to the first embodiment will be omitted.

First cushioning ribs 39 are formed on outer wall surfaces of the partitioned chambers 27 making up the side surfaces of the accommodating case 100" in the thicknesswise direction of the cartridges 21 accommodated in the partitioned chambers 27. In this embodiment, two first cushioning ribs 39 are formed outwardly projectingly on one side wall surface of each partitioned chamber 27 corresponding to the thicknesswise direction of the cartridges 21. Furthermore, second cushioning ribs 410 are formed on the other side wall surfaces of the accommodating case 100" corresponding to a direction perpendicular to the thicknesswise direction of the cartridges 21. Similarly, two second cushioning ribs 410 are formed outwardly projectingly for each partitioned chamber 27. These first and second cushioning ribs 39 and 410 are molded simultaneously when the accommodating case 100" is molded from a flexible resin.

In the event that an object has collided against the partitioned chamber 27 from the outside to apply an impact in the thicknesswise direction of the cartridges 21, the first cushioning ribs 39 are able to absorb the impact by being deflected by themselves. Similarly, in the event that an object has collided against the partitioned chamber 27 from the outside to apply an impact in the widthwise direction of the cartridges 21, the second cushioning ribs 410 are able to absorb the impact by being deflected by themselves. Namely, gaps are formed between the outer wall surface of the case and the cartridges 21 by the first cushioning ribs 39 and the second cushioning ribs 410, and these cushioning ribs 39 and 410 defining these gaps serve as a cushioning material, and are adapted to enhance the impact resistance.

In addition, third cushioning ribs 430 are respectively formed at corners of the partitioned chambers 27 in such a manner as to surround ridge line portions of the respective cartridges 21. Since the third cushioning ribs 430 are respectively disposed at ends where the side provided with the first cushioning ribs 39 and the side provided with the second cushioning ribs 410 meet, it is possible to effectively prevent the deformation of the ridge line portions of the cartridges such as when the accommodating case 100" with the cartridges 21 accommodated therein has dropped.

The upper case 23 and the lower case 25 are assembled, as shown in Fig. 21. When an impact in an X direction, i.e., the thicknesswise direction of the cartridges 21, or in an opposite direction thereto is applied to the partitioned chambers 27 from the outside, the accommodating case 100" accommodating the cartridge groups 29 is able to absorb the impact in that direction as the first cushioning ribs 39 of the upper case 23 and the first cushioning ribs 39 of the lower case 25 are respectively deflected. Further, when an impact in a Z direction, i.e. , the widthwise direction of the cartridges 21, or in an opposite direction thereto is applied to the partitioned chambers 27 from the outside, the accommodating case 100" accommodating the cartridge groups 29 is able to absorb the impact in that direction as the second cushioning ribs 410 of the upper case 23 and the second cushioning ribs 410 of the lower case 25 are respectively deflected. At this time, when the impact with respect to the partitioned chambers 27 is applied to a corner portion, the absorption of the impact can be promoted as the third cushioning ribs 430 of the upper case 23 and the third cushioning ribs 430 of the lower case 25 are deflected, and the first cushioning ribs 39 and/or the second cushioning ribs 410 are additionally deflected.

Therefore, according to the above-described cartridge accommodating case 100", in cases such as when an object has collided against the partitioned chamber 27 from the outside or the cartridge accommodating case 100" has been dropped, the impact can be absorbed by the first cushioning ribs 39, the second cushioning ribs 410, and the third cushioning ribs 430 to prevent the breakage of the cartridge accommodating case 100" and damage to the cartridges 21, thereby making it possible to assure the quality of the cartridges 21. In addition, since the partitioned chambers 27 are provided for holding the cartridge groups 29 each formed into a block by juxtaposing the plurality of cartridges in their thicknesswise direction, as compared with the case where the plurality of cartridges are dispersedly accommodated in the same accommodation area, surplus areas which do not contribute to the accommodation can be secured by the portion in which the plurality of cartridges are put together in one block. Furthermore, by using these surplus area portions as impact absorbing portions (so-called crushable zones), it is possible to absorb the impact such as at the time of the dropping of the case and improve the impact resistance against the cartridges 21. In addition, since it is not necessary to accommodate the plurality of cartridges individually in the conventional manner, the plurality of cartridges 21 superposed and held in their thicknesswise direction can be collectively accommodated in the partitioned chambers 27, and accommodation can be performed efficiently in a short time, thereby making it possible to substantially improve the efficiency in the accommodating operation.

This application is based on Japanese Patent application JP 2006-20749, filed January 30, 2006, Japanese Patent application JP 2006-21174, filed January 30, 2006, and Japanese Patent application JP 2006-23069, filed January 31, 2006, the entire contents of which are hereby incorporated by reference, the same as if set forth at length.

## Claims

1. A cartridge accommodating case comprising:
a cartridge accommodating upper case having a partitioned chamber formed therein for holding a cartridge group formed into a block as a plurality of flat body-shaped cartridges, in each of which a reel with a magnetic tape wound therearound is disposed, are juxtaposed in a thicknesswise direction thereof; and
a cartridge accommodating lower case having a partitioned chamber of a shape substantially identical to that of the partitioned chamber of the cartridge accommodating upper case, the partitioned chamber of the cartridge accommodating lower case being formed at a position opposing the partitioned chamber of the cartridge accommodating upper case;
a partitioned chamber of an expanse which is twice as large as the partitioned chamber being formed in an interior of the cartridge accommodating case by superposing on each other the upper case and the lower case which respectively have a protruding portion and a recessed portion for mutual engagement and are of a same structure, and by engaging the protruding portion and the recessed portion,
wherein a detour portion which is spaced apart a distance from a ridge line of the cartridge accommodated in the cartridge accommodating case is formed so as to form a space portion on an inner side of the detour portion in an area surrounding the ridge line.

2. The cartridge accommodating case according to claim 1, wherein a plurality of partitioned chambers are formed as the partitioned chamber.

3. The cartridge accommodating case according to claim 1, wherein a rib which is in partial contact with a side surface of the cartridge is provided in the space portion.

4. The cartridge accommodating case according to claim 3, wherein a plurality of ribs are provided as the rib.

5. The cartridge accommodating case according to claim 1, wherein a stepped bent portion which covers an outer end of a peripheral edge of one of the upper case and the lower case is formed on an outer end of a peripheral edge of the other one of the upper case and the lower case.

6. The cartridge accommodating case according to claim 5, wherein the stepped bent portion is formed on the outer end of the peripheral edge on one side of a case center line bisecting sides of the upper case and the lower case formed in a substantially square shape.

7. The cartridge accommodating case according to claim 6, wherein a substantially entire perimeter of each of the cases is surrounded by the stepped bent portion when the upper case and the lower case are superposed on each other.

8. The cartridge accommodating case according to claim 5, wherein each of the upper case and the lower case is constituted by an integrally molded piece of a plastic resin.

9. The cartridge accommodating case according to claim 8, wherein the plastic resin includes at least one of polyethylene terephthalate, polypropylene, and polystyrene.

10. The cartridge accommodating case according to claim 8, wherein the plastic resin is translucent.

11. The cartridge accommodating case according to claim 8, wherein each of the upper case and the lower case is formed by subjecting a plastic resin sheet having a thickness of 0.5 to 2.0 mm to drawing.

12. The cartridge accommodating case according to claim 1, further comprising a cushioning rib formed projectingly on at least an outer surface, in a thicknesswise direction of the cartridge, of the partitioned chamber.

13. The cartridge accommodating case according to claim 12, wherein the cushioning rib is formed projectingly on a side outside a side surface of the partitioned chamber, which is an outer side surface of the accommodating case.

14. The cartridge accommodating case according to claim 12, wherein the partitioned chamber is formed by superposing on each other the upper case and the lower case which respectively have a protruding portion and a recessed portion for mutual engagement and are of a same structure, and by engaging the protruding portion and the recessed portion.

15. The cartridge accommodating case according to claim 12, wherein each of the upper case and the lower case is constituted by an integrally molded piece of a plastic resin.

16. The cartridge accommodating case according to claim 15, wherein the cushioning rib is tapered in a direction of the depth of the partitioned chamber.

17. The cartridge accommodating case according to claim 15, wherein the plastic resin includes at least one of polyethylene terephthalate, polypropylene, and polystyrene.

18. The cartridge accommodating case according to claim 15, wherein the plastic resin is translucent.

19. The cartridge accommodating case according to claim 15, wherein each of the upper case and the lower case is formed by subjecting a plastic resin sheet having a thickness of 0.5 to 2.0 mm to drawing.
